(19) Europäisches Patentamt
European Patent Office
Office européen des brevets

(11) EP 4 765 982 A1

(12) EUROPEAN PATENT APPLICATION
published in accordance with Art. 153(4) EPC

(43) Date of publication:
24.06.2026 Bulletin 2026/26

(21) Application number: 24857767.8

(22) Date of filing: 09.04.2024

(51) International Patent Classification (IPC):
$H04W\ 72/12^{(2023.01)}$

(52) Cooperative Patent Classification (CPC):
H04W 4/12; H04W 4/20; H04W 72/12;
H04W 72/542

(86) International application number:
PCT/CN2024/086709

(87) International publication number:
WO 2025/044217 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.08.2023 CN 202311088783

(71) Applicant: HUAWEI TECHNOLOGIES CO., LTD.
Shenzhen 518129 (CN)

(72) Inventors:
• WEI, Xiuhong
Shenzhen, Guangdong 518129 (CN)
• LI, Xueru
Shenzhen, Guangdong 518129 (CN)

(74) Representative: Pfenning, Meinig & Partner mbB
Patent- und Rechtsanwälte
Theresienhöhe 11a
80339 München (DE)

(54) **REFERENCE SIGNAL SENDING METHOD, REFERENCE SIGNAL PROCESSING METHOD, AND RELATED APPARATUS**

(57) Embodiments of this application are applied to the communication field, and disclose a reference signal sending method, a reference signal processing method, and a related apparatus, to implement sensing detection. The method in embodiments of this application includes: sending a first reference signal, where the first reference signal is mapped to a first frequency band by using a first comb whose size is M, and M is a positive integer; and periodically sending a second reference signal, where the second reference signal is mapped to a second frequency band by using at least one second comb, and a size of each second comb is a positive integer greater than M. The first reference signal and the second reference signal are used to determine a measurement result of a sensing target. In embodiments of this application, overheads of needed reference signals can be reduced while sensing detection is implemented.

A first apparatus sends a first reference signal, where the first reference signal is mapped to a first frequency band by using a first comb whose size is M, and M is a positive integer — 201

The first apparatus periodically sends a second reference signal, where the second reference signal is mapped to a second frequency band by using a second comb whose size is N, a bandwidth of the second frequency band is the same as a bandwidth of the first frequency band, and N>M — 202

FIG. 2

**Description**

This application claims priority to Chinese Patent Application No. 202311088783.9, filed with the China National Intellectual Property Administration on August 25, 2023 and entitled "REFERENCE SIGNAL SENDING METHOD, REFERENCE SIGNAL PROCESSING METHOD, AND RELATED APPARATUS", which is incorporated herein by reference in its entirety.

**TECHNICAL FIELD**

Embodiments of this application relate to the communication field, and in particular, to a reference signal sending method, a reference signal processing method, and a related apparatus.

**BACKGROUND**

In a sensing scenario, both a ranging requirement and a velocity measurement requirement usually need to be satisfied. Ranging performance and velocity measurement performance are respectively determined by a frequency domain feature and a time domain feature of a reference signal (reference signal, RS).

For ranging, a bandwidth $B$ of the reference signal determines a ranging resolution $\varDelta R$, that is, $\varDelta R = \dfrac{c}{2B}$, where $C$ is the speed of light. A larger bandwidth indicates a finer ranging resolution, making distinguishing between all targets in the sensing scenario easier. A frequency domain interval $\varDelta f$ of the reference signal determines a maximum unambiguous ranging range $R_{\max}$ of ranging, that is, $R_{\max} = \dfrac{c}{2\varDelta f}$. A smaller frequency domain interval, in other words, denser subcarriers occupied by the interval, indicates a larger unambiguous ranging range. For velocity measurement, a time domain interval $T_P$ for sending the reference signal determines a maximum unambiguous velocity measurement range $V_{\max}$, that is, $V_{\max} = \dfrac{\lambda}{2T_P}$, where $\lambda = \dfrac{c}{f_c}$ is a carrier wavelength, and $f_c$ is a carrier frequency. A smaller time domain interval $T_P$ for sending the reference signal indicates a larger unambiguous velocity measurement range.

In a current sensing measurement process, to obtain an accurate ranging result and an accurate velocity measurement result, a reference signal used for measurement needs to be frequently sent, causing excessively large resource overheads for sending the reference signal.

**SUMMARY**

Embodiments of this application provide a reference signal sending method, a reference signal processing method, and a related apparatus, to detect a sensing target in a sensing scenario, and reduce reference signal overheads.

A first aspect of embodiments of this application provides a reference signal sending method:

first sending a first reference signal, where the first reference signal is mapped to a first frequency band by using a first comb whose size is M, and M is a positive integer; and
then periodically sending a second reference signal, where each second reference signal is mapped to a second frequency band by using at least one second comb, and a size of each second comb is a positive integer greater than M.

The two types of sent reference signals: the first reference signal and the second reference signal are used to determine a measurement result of a sensing target, and the measurement result includes a range of the sensing target and a moving velocity of the sensing target.

According to the foregoing method, the second reference signal is sent by using the second comb whose size is greater than that of the first comb, so that a frequency domain interval of the second reference signal can be greater than a frequency domain interval of the first reference signal. Therefore, a quantity of subcarriers occupied by each second reference signal is less than a quantity of subcarriers occupied by the first reference signal. In comparison with directly and periodically sending the first reference signal, overall overheads of reference signals needed for implementing sensing can be reduced.

In some optional implementations, a bandwidth of the second frequency band is the same as a bandwidth of the first frequency band.

Particularly, the second frequency band and the first frequency band may be a same frequency band, and both the first reference signal and the second reference signal are mapped to the same frequency band. The first reference signal and the second reference signal are mapped to the frequency band by using different comb sizes, and are sent at different moments.

In this possible implementation, a ranging result based on the first reference signal and a ranging result based on the second reference signal may have a same ranging resolution. This helps implement matching between the results obtained by performing ranging on the sensing target by using the first reference signal and the second reference signal.

In some optional implementations, the second reference signal is mapped to the second frequency band by using a plurality of second combs, where a greatest common divisor of sizes of every two second combs is not greater than the size M of the first comb.

In this possible implementation, the second reference signal having a plurality of different comb sizes is sent, so that not all ranging results corresponding to every two sensing targets in different comb sizes can be aliased. In this way, unambiguous ranging results and unambiguous velocity measurement results in a multi-target scenario can be matched one by one.

In some optional implementations, a size of each of the plurality of second combs is an integer multiple of the size M of the first comb. When M is 1, sizes of all of the second combs are relatively prime.

In this possible implementation, in the multi-target scenario, this helps match the ranging result of the sensing target based on the first reference signal with the ranging result of the sensing target based on the second reference signal.

In some optional implementations, all of the plurality of second combs are mapped to a same start subcarrier on the frequency band, that is, mapping starts from a same subcarrier sequence number.

In this possible implementation, different second combs start to be mapped to a same subcarrier, so that a subcarrier reuse rate can be increased, to further reduce reference signal overheads.

In some optional implementations, when the second reference signal is mapped to the second frequency band by using one second comb, a size of the second comb is N, and the method further includes: periodically sending a third reference signal, where each third reference signal is sent in a form in which the third reference signal is mapped to a third frequency band by using a third comb whose size is X. X is a positive integer greater than M and not equal to N, and a greatest common divisor of X and N is not greater than M.

In this possible implementation, the third reference signal is sent by using the third comb whose size is greater than that of the first comb. The size of the third comb is different from the size of the second comb, and a greatest common divisor of the size of the third comb and the size of the second comb is not greater than the size M of the first comb, so that not all ranging results of every two sensing targets based on the second reference signal and ranging results of the every two sensing targets based on the third reference signal can be aliased. In this way, unambiguous ranging results and unambiguous velocity measurement results in a multi-target scenario can be matched one by one.

In some optional implementations, a bandwidth of the third frequency band is the same as the bandwidth of the first frequency band.

Particularly, the first frequency band, the second frequency band, and the third frequency band may also be a same frequency band, and the first reference signal, the second reference signal, and the third reference signal are all mapped to the same frequency band. The first reference signal, the second reference signal, and the third reference signal are mapped to the frequency band by using different comb sizes, and are sent at different moments.

In this possible implementation, a ranging result based on the first reference signal and a ranging result based on the third reference signal may have a same ranging resolution. This helps implement matching between the results obtained by performing ranging on the sensing target by using the first reference signal and the third reference signal.

In some optional implementations, each third reference signal corresponds to one second reference signal, and a time interval between a sending moment of each third reference signal and a sending moment of the second reference signal corresponding to the third reference signal is less than or equal to a first threshold. The first threshold is duration in which ranging results based on the third reference signal and the second reference signal do not change significantly. When the time interval between the third reference signal and the second reference signal is equal to 0, it may be understood as that two reference signals whose comb sizes are N and X are sent on one frequency band at the same time.

In this possible implementation, the time interval between each third reference signal and the corresponding second reference signal does not exceed duration in which the ranging results based on the third reference signal and the second reference signal change significantly. This helps distinguish between multipath aliasing in the multi-target scenario.

In some optional implementations, both the size N of the second comb and the size X of the third comb are integer multiples of the size M of the first comb. When M is 1, N and X are relatively prime.

In this possible implementation, in the multi-target scenario, this helps match the ranging result based on the first reference signal with the ranging result based on the second reference signal and the ranging result based on the third reference signal.

In some optional implementations, a time interval between a sending moment of the first reference signal and a sending moment of a 1st second reference signal is less than or equal to a second threshold. In other words, the 1st second reference signal is sent within duration of the second threshold after the first reference signal is sent. The second threshold is duration in which a target range does not change significantly.

In this possible implementation, the time interval between the sending moment of the first reference signal and the sending moment of the 1st second reference signal does not exceed duration in which the target range changes significantly. This helps match the ranging result based on the first reference signal with the ranging result based on the second reference signal.

In some optional implementations, before periodically sending the second reference signal, the method further includes: receiving a first reflected signal, where the first reflected signal is an echo signal that is of the sent first reference signal and that is reflected from the sensing target; determining a first range of the sensing target based on the first reflected signal, where the sensing target may be one or more targets, indicating that the first range may be one or more; and determining the size of the second comb based on the first range.

Particularly, both the size of the second comb and the size of the third comb may also be determined based on the first range.

In this possible implementation, the first range of the sensing target is calculated by using the first reflected signal, and then a second comb that does not cause multipath aliasing in ranging results that are based on the second reference signal is determined by using the first range. This helps reduce reference signal overheads.

In some optional implementations, before periodically sending the second reference signal, the method further includes: receiving indication information, where the indication information is used to determine the size of the second comb.

Particularly, the indication information may also be used to determine the size of the second comb and the size of the third comb.

In this possible implementation, the size of the second comb, or the size of the second comb and the size of the third comb are determined based on the indication information, so that multipath aliasing can not occur in ranging results that are based on the second reference signal, ranging results based on the second reference signal having a plurality of comb sizes can distinguish between sensing targets on which multipath aliasing occurs, or the ranging results based on the second reference signal and the third reference signal can distinguish between sensing targets on which multipath aliasing occurs, thereby implementing matching between unambiguous ranging results and unambiguous velocity measurement results of the sensing targets.

In some optional implementations, there are a plurality of sensing targets, a second range is calculated by using a received second reflected signal, and the indication information includes: second ranges corresponding to different sensing targets; a range difference between every two sensing targets; a recommended size of the second comb; or a recommended size of the second comb and a recommended size of the third comb. The second ranges of the different sensing targets or the range difference between the every two sensing targets may be used to determine the size of the second comb, or determine the size of the second comb and the size of the third comb.

In this possible implementation, the second ranges of the sensing targets are calculated by using the second reflected signal, and then the indication information is sent based on the second ranges, so that the second comb does not cause multipath aliasing in the ranging results that are based on the second reference signal. This helps reduce reference signal overheads. The indication information may have a plurality of different forms.

In some optional implementations, the measurement result of the sensing target includes a third range, a fourth range, and a first velocity corresponding to the fourth range. The third range is an unambiguous ranging result obtained based on the first reference signal. The fourth range is an ambiguous ranging result obtained based on the second reference signal. The first velocity is an unambiguous velocity measurement result obtained based on the second reference signal. There are one or more sensing targets. The first comb and the second comb are used to match the third range in the measurement result with the fourth range and the first velocity corresponding to the fourth range, to finally obtain the third range of the sensing target and the corresponding first velocity.

In this possible implementation, a proportional relationship between the first comb and the second comb is used to match unambiguous ranging results with unambiguous velocity measurement results of the sensing target one by one.

In some optional implementations, the measurement result of the sensing target further includes a fifth range and a first velocity corresponding to the fifth range. The fifth range is an ambiguous ranging result obtained based on the third reference signal. The first velocity is an unambiguous velocity measurement result obtained based on the third reference signal. There are one or more sensing targets. The first comb, the second comb, and the third comb are used to match the third range in the measurement result with the fourth range and the first velocity corresponding to the fourth range; and/or match the third range with the fifth range and the first velocity corresponding to the fifth range, to finally obtain the third range of the sensing target and the corresponding first velocity.

In this possible implementation, a proportional relationship between the first comb, the second comb, and the third comb is used to match unambiguous ranging results with unambiguous velocity measurement results of the sensing target one by one.

In some optional implementations, the first reference signal is also periodically sent, and a sending periodicity of the first reference signal is greater than a sending periodicity of the second reference signal. Therefore, in each sending periodicity of the first reference signal, a plurality of second reference signals are sent.

In this possible implementation, the first reference signal and the second reference signal are periodically sent, so that unambiguous ranging results and unambiguous velocity measurement results of the sensing target can be continuously obtained.

A second aspect of embodiments of this application provides a reference signal processing method:

receiving a second reflected signal, where the second reflected signal is a reflected signal that is of a sent first reference signal and that is reflected from a sensing target, the first reference signal is mapped to a first frequency band by using a first comb whose size is M, and M is a positive integer; and

then receiving a third reflected signal, where the third reflected signal is a reflected signal that is of a periodically sent second reference signal and that is reflected from the sensing target, each second reference signal is mapped to a second frequency band by using at least one second comb, and a size of each second comb is greater than M.

The two types of sent reference signals: the first reference signal and the second reference signal are used to determine a measurement result of the sensing target, and the measurement result includes a range of the sensing target and a moving velocity of the sensing target.

According to the foregoing method, the second reference signal is sent by using the second comb whose size is greater than that of the first comb, so that a frequency domain interval of the second reference signal can be greater than a frequency domain interval of the first reference signal. Therefore, a quantity of subcarriers occupied by the second reference signal is less than a quantity of subcarriers occupied by the first reference signal. In comparison with directly and periodically sending the first reference signal, overall overheads of reference signals needed for implementing sensing can be reduced.

In some optional implementations, when the second reference signal is mapped to the second frequency band by using one second comb, a size of the second comb is N, and the method further includes: receiving a fourth reflected signal, where the fourth reflected signal is a reflected signal that is of a periodically sent third reference signal and that is reflected from the sensing target, each third reference signal is mapped to a third frequency band by using a third comb whose size is X, X is a positive integer greater than M and not equal to N, and a greatest common divisor of X and N is not greater than M.

According to the foregoing method, the third reference signal is sent by using the third comb whose size is greater than that of the first comb. The size of the third comb is different from the size of the second comb, and a greatest common divisor of the size of the third comb and the size of the second comb is not greater than the size M of the first comb, so that not all ranging results of every two sensing targets based on the second reference signal and ranging results of the every two sensing targets based on the third reference signal can be aliased. In this way, unambiguous ranging results and unambiguous velocity measurement results in a multi-target scenario can be matched one by one.

In some optional implementations, when there are a plurality of sensing targets, the method further includes: determining second ranges of the different sensing targets based on the second reflected signal; and sending indication information based on the second ranges of the different sensing targets, where the indication information may be used to determine the size of the second comb.

Particularly, the indication information may also be used to determine the size of the second comb and the size of the third comb.

In this possible implementation, the second ranges of the different sensing targets are calculated by using the received second reflected signal, so that a size of a second comb that does not cause multipath aliasing in ranging results that are based on the second reference signal can be determined in advance, and the indication information is sent, thereby helping reduce reference signal overheads.

In some optional implementations, the indication signal includes: the second ranges of the different sensing targets; a range difference between every two sensing targets; a recommended size of the second comb; or a recommended size of the second comb and a recommended size of the third comb. The size of the second comb may be determined based on the second ranges of the different sensing targets or the range difference between the every two sensing targets.

In this possible implementation, the indication information may have a plurality of different forms.

In some optional implementations, the measurement result of the sensing target includes a third range, a fourth range, and a first velocity corresponding to the fourth range. The third range is an unambiguous ranging result obtained based on the first reference signal. The fourth range is an ambiguous ranging result obtained based on the second reference signal. The first velocity is an unambiguous velocity measurement result obtained based on the second reference signal: the moving velocity of the sensing target. There are one or more sensing targets. The first comb and the second comb are used to match the third range in the measurement result with the fourth range and the first velocity corresponding to the fourth range, to finally obtain the third range of the sensing target and the corresponding first velocity.

In this possible implementation, a proportional relationship between the first comb and the second comb is used to match unambiguous ranging results with unambiguous velocity measurement results of the sensing target one by one.

In some optional implementations, the measurement result of the sensing target further includes a fifth range and a first velocity corresponding to the fifth range. The fifth range is an ambiguous ranging result obtained based on the third reference signal. The first velocity is an unambiguous velocity measurement result obtained based on the third reference signal: the moving velocity of the sensing target. There are one or more sensing targets. The first comb, the second comb, and the third comb are used to match the third range in the measurement result with the fourth range and the first velocity corresponding to the fourth range; and/or match the third range with the fifth range and the first velocity corresponding to the fifth range, to finally obtain the third range of the sensing target and the corresponding first velocity.

In this possible implementation, a proportional relationship between the first comb, the second comb, and the third comb is used to match unambiguous ranging results with unambiguous velocity measurement results of the sensing target one by one.

A third aspect of this application provides a communication apparatus. The communication apparatus includes a first transceiver module and a second transceiver module.

The first transceiver module is configured to send a first reference signal, where the first reference signal is mapped to a first frequency band by using a first comb whose size is M, and M is a positive integer.

The second transceiver module is configured to periodically send a second reference signal, where the second reference signal is mapped to a second frequency band by using at least one second comb, and a size of each second comb is a positive integer greater than M.

The first reference signal and the second reference signal are used to determine a measurement result of a sensing target.

In some optional implementations, a bandwidth of the second frequency band is the same as a bandwidth of the first frequency band.

In some optional implementations, each second reference signal is mapped to the second frequency band by using a plurality of second combs, and a greatest common divisor of sizes of every two second combs is not greater than M.

In some optional implementations, the size of each second comb is an integer multiple of M.

In some optional implementations, when the second reference signal is mapped to the second frequency band by using the plurality of second combs, different second combs correspond to a same start subcarrier for mapping.

In some optional implementations, when there is one second comb, a size of the second comb is N, N is a positive integer, and the method further includes:

periodically sending a third reference signal, where the third reference signal is mapped to a third frequency band by using a third comb whose size is X, X is a positive integer greater than M and not equal to N, and a greatest common divisor of X and N is not greater than M.

In some optional implementations, a bandwidth of the third frequency band is the same as the bandwidth of the second frequency band.

In some optional implementations, each third reference signal corresponds to one second reference signal, and a time interval between a sending moment of each third reference signal and a sending moment of the second reference signal corresponding to the third reference signal is less than or equal to a first threshold.

In some optional implementations, both X and N are integer multiples of M.

In some optional implementations, a time interval between a sending moment of the first reference signal and a sending moment of a $1^{st}$ second reference signal is less than or equal to a second threshold.

In some optional implementations, before periodically sending the second reference signal, the method further includes:

receiving a first reflected signal, where the first reflected signal is an echo signal that is of the sent first reference signal and that is reflected from the sensing target, and the first reflected signal is used to determine a first range; and determining the size of the second comb, or determining the size of the second comb and the size of the third comb based on the first range.

In some optional implementations, a second reflected signal is received, the second reflected signal is a reflected signal that is of the sent first reference signal and that is reflected from the sensing target, there are a plurality of sensing targets, the second reflected signal is used to determine second ranges of the different sensing targets, and indication information includes:

the second ranges of the different sensing targets;
a difference between every two second ranges; or
a recommended size of the second comb, or a recommended size of the second comb and a recommended size of the third comb.

The second ranges corresponding to the different sensing targets or the difference between the every two second ranges is used to determine the size of the second comb, or determine the size of the second comb and the size of the third comb.

In some optional implementations, the measurement result of the sensing target includes a third range, a fourth range, and a first velocity corresponding to the fourth range, the third range is obtained based on the first reference signal, the fourth range is obtained based on the second reference signal, the first velocity is a moving velocity that is of the sensing target and that is obtained based on the second reference signal, and there are one or more sensing targets.

The first comb and the second comb are used to match the third range in the measurement result with the fourth range and the first velocity corresponding to the fourth range.

In some optional implementations, the first reference signal is periodically sent, and a sending periodicity of the first reference signal is greater than a sending periodicity of the second reference signal.

A fourth aspect of this application provides a communication apparatus. The communication apparatus includes a first processing module and a second processing module.

The first processing module is configured to receive a second reflected signal, where the second reflected signal is a reflected signal that is of a sent first reference signal and that is reflected from a sensing target, the first reference signal is mapped to a first frequency band by using a first comb whose size is M, and M is a positive integer.

The second processing module is configured to receive a third reflected signal, where the third reflected signal is a reflected signal that is of a periodically sent second reference signal and that is reflected from the sensing target, each second reference signal is mapped to a second frequency band by using at least one second comb, and a size of each second comb is greater than M.

The first reference signal and the second reference signal are used to determine a measurement result of the sensing target.

In some optional implementations, when there is one second comb, a size of the second comb is N, and the method further includes:

receiving a fourth reflected signal, where the fourth reflected signal is a reflected signal that is of a periodically sent third reference signal and that is reflected from the sensing target, each third reference signal is mapped to a third frequency band by using a third comb whose size is X, X is an integer greater than M and not equal to N, and a greatest common divisor of X and N is not greater than M.

In some optional implementations, there are a plurality of sensing targets, and the method further includes:

determining second ranges of the different sensing targets based on the second reflected signal; and
sending indication information based on the second ranges, where the indication information is used to determine the size of the second comb, or determine the size of the second comb and the size of the third comb.

In some optional implementations, the indication information includes:

the second ranges of the different sensing targets;
a difference between every two second ranges; or
a recommended size of the second comb, or a recommended size of the second comb and a recommended size of the third comb.

The second ranges of the different sensing targets or the difference between the every two second ranges is used to determine the size of the second comb, or determine the size of the second comb and the size of the third comb.

In some optional implementations, the measurement result of the sensing target includes a third range, a fourth range, and a first velocity corresponding to the fourth range, the third range is obtained based on the first reference signal, the fourth range is obtained based on the second reference signal, the first velocity is a moving velocity that is of the sensing target and that is obtained based on the second reference signal, and there are one or more sensing targets.

The first comb and the second comb are used to match the third range in the measurement result with the fourth range and the first velocity corresponding to the fourth range.

A fifth aspect of this application provides a communication apparatus. The communication apparatus includes a processor. The processor is configured to invoke and run a computer program stored in a storage, to enable the processor to implement any one of the first aspect or the implementations of the first aspect.

Optionally, the communication apparatus further includes a transceiver. The processor is further configured to control the transceiver to send and receive a signal.

Optionally, the communication apparatus includes the storage. The storage stores the computer program.

The communication apparatus according to the fifth aspect may be a device or a chip (a system) in the device.

A sixth aspect of this application provides a communication apparatus. The communication apparatus includes a processor. The processor is configured to invoke and run a computer program stored in a storage, to enable the processor to implement any one of the second aspect or the implementations of the second aspect.

Optionally, the communication apparatus further includes a transceiver. The processor is further configured to control the transceiver to send and receive a signal.

Optionally, the communication apparatus includes the storage. The storage stores the computer program.

The communication apparatus according to the sixth aspect may be a device or a chip (a system) in the device.

A seventh aspect of this application provides a communication apparatus. The communication apparatus may be a one-to-one corresponding module or unit (for example, a chip, a chip system, or a circuit) for performing the method/operations/steps/actions described in the first aspect/third aspect, or an apparatus that can be matched with the communication apparatus for use.

An eighth aspect of this application provides a communication apparatus. The communication apparatus may be a one-to-one corresponding module or unit (for example, a chip, a chip system, or a circuit) for performing the method/operations/steps/actions described in the second aspect/fourth aspect, or an apparatus that can be matched with the communication apparatus for use.

A ninth aspect of this application provides a communication system. The communication system includes the communication apparatus in the fifth aspect and the communication apparatus in the sixth aspect. The communication apparatus in the fifth aspect is configured to perform any one of the first aspect or the implementations of the first aspect. The communication apparatus in the sixth aspect is configured to perform any one of the second aspect or the implementations of the second aspect.

A tenth aspect of this application provides a computer program product including instructions. When the computer program product runs on a computer, the computer is enabled to perform any one of the first aspect or the implementations of the first aspect, or the computer is enabled to perform any one of the second aspect or the implementations of the second aspect.

An eleventh aspect of this application provides a computer-readable storage medium, including computer instructions. When the computer instructions are run on a computer, the computer is enabled to perform any one of the first aspect or the implementations of the first aspect, or the computer is enabled to perform any one of the second aspect or the implementations of the second aspect.

A twelfth aspect of this application provides a chip apparatus, including a processor, configured to: connect to a storage, and invoke a program stored in the storage, to enable the processor to perform any one of the first aspect or the implementations of the first aspect, or enable the processor to perform any one of the second aspect or the implementations of the second aspect.

## BRIEF DESCRIPTION OF DRAWINGS

To describe the technical solutions in embodiments of this application more clearly, the following briefly describes the accompanying drawings for describing embodiments. It is clear that the accompanying drawings in the following descriptions show merely some embodiments of this application, and a person skilled in the art may still derive other drawings from these accompanying drawings without creative efforts.

FIG. 1A is a diagram of a sensing scenario according to an embodiment of this application;

FIG. 1B is a diagram of a self-sending and self-receiving scenario according to an embodiment of this application;

FIG. 1C is a diagram of a self-sending and other-receiving scenario according to an embodiment of this application;

FIG. 2 is a diagram of an embodiment of a reference signal sending method according to an embodiment of this application;

FIG. 3 is a diagram of sending a reference signal in a reference signal sending method according to an embodiment of this application;

FIG. 4 is a diagram of a measurement result of a reference signal sending method according to an embodiment of this application;

FIG. 5 is a diagram of another measurement result of a reference signal sending method according to an embodiment of this application;

FIG. 6 is a diagram of another embodiment of a reference signal sending method according to an embodiment of this application;

FIG. 7 is another diagram of sending a reference signal in a reference signal sending method according to an embodiment of this application;

FIG. 8 is a diagram of another measurement result of a reference signal sending method according to an embodiment of this application;

FIG. 9 is another diagram of sending a reference signal in a reference signal sending method according to an embodiment of this application;

FIG. 10 is a diagram of another embodiment of a reference signal sending method according to an embodiment of this application;

FIG. 11A is a diagram of a structure of a communication apparatus according to an embodiment of this application;

FIG. 11B is a diagram of another structure of a communication apparatus according to an embodiment of this application; and

FIG. 11C is a diagram of another structure of a communication apparatus according to an embodiment of this application.

## DESCRIPTION OF EMBODIMENTS

Embodiments of this application provide a reference signal sending method, to perform sensing detection on a sensing target in a sensing scenario. This application further provides a corresponding reference signal processing method, communication apparatus, communication system, computer-readable storage medium, computer program product, and the like. Details are separately described in the following.

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

In the specification, claims, and accompanying drawings of this application, the terms "first", "second", "third", "fourth", and the like (if existent) are intended to distinguish between similar objects but do not necessarily indicate a specific order or sequence. It should be understood that data used in such a way is interchangeable in proper circumstances, so that embodiments of this application described herein can be implemented, for example, in an order other than the order illustrated or described herein. In addition, the terms "include", "have", and any variants thereof are intended to cover non-exclusive inclusion. For example, a process, method, system, product, or device that includes a series of steps or units is not necessarily limited to those expressly listed steps or units, but may include other steps or units not expressly listed or inherent to such a process, method, product, or device.

The technical solutions in embodiments of this application may be applied to various communication systems, for example, a satellite communication system, a 5th generation (5th generation, 5G) system or a new radio (new radio, NR) system, a sidelink (sidelink, SL) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system after a 5G network (for example, a 6G mobile communication system), and a vehicle-to-everything (vehicle-to-everything, V2X) communication system.

In addition to having a stronger communication capability, the foregoing communication systems also have a sensing capability, and are communication systems having integrated sensing and communication. The communication system having integrated sensing and communication means that the communication system may not only perform communication by using a communication signal (the communication signal may also be described as a communication channel), but also perform sensing measurement by using a sensing signal (the sensing signal may also be described as a sensing channel). "Sensing" may be understood as obtaining a sense of a target object or environment information (for example, an attribute and a status) by analyzing direct, reflected, and scattered signals of a radio wave, to complete functions such as positioning, ranging, velocity measurement, imaging, detection, identification, and environment reconstruction, thereby implementing sensing exploration of a physical world.

The technical solutions in embodiments of this application may be applied to a sensing scenario, or may be applied to a positioning scenario. It is clear that the technical solutions may be further applied to a scenario related to sensing or positioning, or a scenario derived from sensing or positioning.

For example, the method provided in embodiments of this application may be applied to a vehicle-to-everything scenario, for example, used for vehicle traffic violation detection and assisted self-driving. In vehicle traffic violation detection, continuous sensing detection may be performed on a vehicle to detect whether the vehicle violates a traffic rule (an excessive velocity, parking violation, or bus lane violation), and the like. In assisted self-driving, self-driving of a vehicle may be assisted by sensing a surrounding traffic environment, for example, sensing a range between the vehicle and a lane line, to determine whether the vehicle deviates from a route, and the like.

For example, the method provided in embodiments of this application may be further applied to an uncrewed aerial vehicle scenario. For example, sensing detection is performed on specific large-range airspace, to identify an illegal uncrewed aerial vehicle intrusion. Alternatively, a sensing result is provided for the uncrewed aerial vehicle, to assist the uncrewed aerial vehicle in flight, thereby improving an obstacle avoidance success rate of the uncrewed aerial vehicle.

For example, the method provided in embodiments of this application may be further applied to a smart home scenario, and behaviors of a person are sensed to further implement control on a home device, security surveillance, health detection, and the like.

The scenarios described in embodiments of this application are intended to describe the technical solutions in embodiments of this application more clearly, and do not constitute a limitation on the technical solutions provided in embodiments of this application. A person of ordinary skill in the art may learn that, with emergence of a new scenario, the technical solutions provided in embodiments of this application are also applicable to similar technical problems.

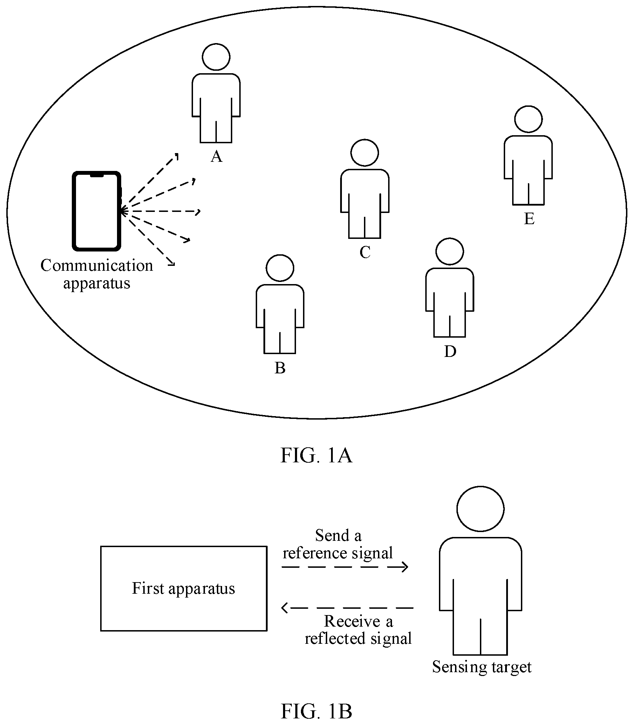

For the sensing scenario provided in this application, refer to FIG. 1A to FIG. 1C for understanding.

As shown in FIG. 1A, the sensing scenario includes one communication apparatus and five targets that need to be sensed: a target A, a target B, a target C, a target D, and a target E, which are respectively at different positions in the sensing scenario. The communication apparatus needs to obtain a position and a moving velocity of the target in the scenario based on a service requirement. The communication apparatus sends a reference signal, receives, through a receiver, a signal reflected after the reference signal arrives at the target, and analyzes and processes the reflected signal, to obtain a ranging result and a velocity measurement result of each target in the scenario.

The communication apparatus may send the reference signal through an antenna port. In the following descriptions, in embodiments of this application, one antenna port is considered to be used to implement ranging and velocity measurement on a sensing target. However, the present invention is not limited thereto, and may be extended by a person skilled in the art to a plurality of antenna ports for sensing/positioning.

This scenario may be implemented in a self-sending and self-receiving manner, or may be implemented in a self-sending and other-receiving manner.

FIG. 1B shows a self-sending and self-receiving scenario. To be specific, both sending a reference signal and receiving a reflected signal are performed by a first apparatus.

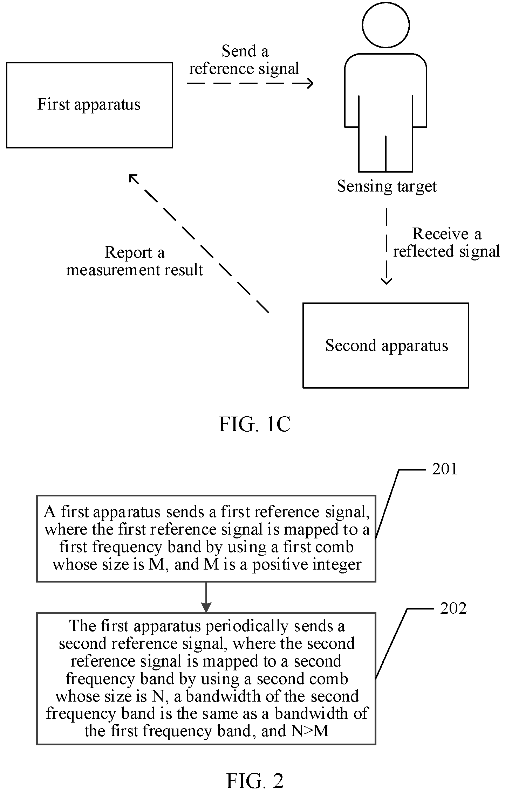

FIG. 1C shows a self-sending and other-receiving scenario. To be specific, a first apparatus sends a reference signal, and a second apparatus receives a reflected signal. The first apparatus and the second apparatus are not a same apparatus. After receiving the reflected signal, the second apparatus needs to report, to the sending apparatus that sends the reference signal, a measurement result obtained based on the reflected signal.

The "first apparatus" may be the foregoing access network device/terminal device, or may be a chip in the access network device/terminal device. The "second apparatus" may be the foregoing access network device/terminal device, or may be a chip in the access network device/terminal device.

The following describes the terminal device and the access network device in this application.

The terminal device may be a wireless terminal device that can receive scheduling and indication information from a device in a core network or the access network device. The wireless terminal device may be a device that provides voice and/or data connectivity for a user, a handheld device with a wireless connection function, another processing device connected to a wireless modem, or a device with a sensing function.

The terminal device is also referred to as user equipment (user equipment, UE), a mobile station (mobile station, MS), a mobile terminal (mobile terminal, MT), or the like, and is a device that includes a wireless communication function and/or a sensing function (providing voice/data connectivity for a user), for example, a handheld device or a vehicle-mounted device with a wireless connection function. Currently, some examples of the terminal device are: a mobile phone (mobile phone), a tablet computer, a notebook computer, a palmtop computer, an uncrewed aerial vehicle, a mobile internet device (mobile internet device, MID), a wearable device, a virtual reality (virtual reality, VR) device, an augmented reality (augmented reality, AR) device, a wireless terminal in industrial control (industrial control), a wireless terminal in vehicle-to-everything, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like. For example, the wireless terminal in vehicle-to-everything may be a vehicle-mounted device, a vehicle device, a vehicle-mounted module, a vehicle, or the like. The wireless terminal in industrial control may be a camera, a robot, or the like. The wireless terminal in the smart home may be a television, an air conditioner, a sweeper, a speaker, a set-top box, or the like.

The access network device is a device that is deployed in a radio access network and that provides a wireless communication function and/or a sensing function for the terminal device. For example, the access network device may be a radio access network (radio access network, RAN) node that connects the terminal device to a wireless network.

The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), or the like, or may be an access network device in a 5G mobile communication system, for example, a next generation NodeB (next generation NodeB, gNB), a transmission reception point (transmission reception point, TRP), or a transmission point (transmission point, TP) in a new radio (new radio, NR) system, or one or one group of antenna panels (including a plurality of antenna panels) of a base station in the 5G mobile communication system. Alternatively, the access network device may be a network node forming a gNB or a transmission point, for example, a baseband unit (baseband unit, BBU) or a distributed unit (distributed unit, DU).

In some deployment, the gNB may include a central unit (central unit, CU) and a DU. The gNB may further include an active antenna unit (active antenna unit, AAU). The CU implements a part of functions of the gNB, and the DU implements a part of functions of the gNB. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered as being sent by the DU, or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

The following explains some nouns or terms used in embodiments of this application, and the nouns or terms also serve as a part of content of the present invention.

1. Orthogonal frequency division multiplexing (OFDM): is a type of multi-carrier modulation. A main idea is dividing a wide carrier into several orthogonal subcarriers, converting a high-velocity data signal into parallel low-velocity sub data streams, and modulating the sub data streams for transmission on each subcarrier.

2. Carrier (carrier): is a radio wave that has a specific frequency band and that is modulated for signal transmission, or an electromagnetic wave with a specific bandwidth.

3. Subcarrier (subcarrier): is obtained by dividing a carrier with a specific bandwidth in an OFDM system.

4. Subcarrier spacing (subcarrier spacing, SCS): is a width of a subcarrier, and is usually 15 kHz or a multiple of 15 kHz, where kHz is kilohertz.

5. Symbol: is a time domain signal within specific duration, and is an OFDM symbol in the OFDM system. A length of each OFDM symbol is usually a reciprocal of a subcarrier spacing. For example, a symbol length corresponding to an SCS of 15 kHz is 66.7 microseconds ($\mu$s).

6. Frequency band: is a frequency domain resource of a specific width, and may be a carrier, a bandwidth part (Bandwidth part, BWP), or a resource block (resource block, RB) set, where one RB includes 12 subcarriers.

7. Resource: includes a time domain resource, a frequency domain resource, and the like. The time domain resource is, for example, a symbol, a symbol group, a slot (slot), or a mini-slot (mini-slot). The symbol may be an OFDM symbol, or may be a discrete Fourier transform spread orthogonal frequency division multiplexing (discrete Fourier transform spread orthogonal frequency division multiplexing, DFT-s-OFDM) symbol, or a symbol with an orthogonal time frequency space (orthogonal time frequency space, OTFS) waveform. The frequency domain resource is, for example, a subcarrier, a resource element (resource element), a subchannel (subchannel), an interlace (interlace), an interlace group, or a resource block (resource block, RB) set (set). The subchannel may be a plurality of contiguous physical resource blocks (physical resource blocks, PRBs) in frequency domain. For example, 10 contiguous PRBs are one subchannel, or 100 contiguous PRBs are one subchannel. The interlace may be a plurality of non-contiguous REs at an equal interval or a plurality of non-contiguous PRBs at an equal interval in frequency domain. Minimum granularities of time domain resource allocation and frequency domain resource allocation are not limited in embodiments of this application. For example, the minimum granularity of the time domain resource may be one symbol, one symbol group, one mini-slot, one slot, or the like. The minimum granularity of the frequency domain resource may be one subcarrier, one RE, or one interlace.

8. Resource pool: is a set of time-frequency resources used for sidelink transmission, for example, includes several slots and subchannels.

9. Reference signal: is a known signal provided by a transmitting-end for a receiving-end for channel estimation or channel sounding. The known signal indicates that a frequency domain position of the signal is known, a time domain position is known, sent content is known, and used power is known.

10. Comb (comb): is a frequency domain mapping manner in which a signal occupies subcarriers at an equal interval in frequency domain. That a comb size (comb size) is M means that one subcarrier is occupied every M subcarriers, that is, a spacing between every two occupied subcarriers is $\Delta f = M \Delta f_0$, and $\Delta f_0$ is a subcarrier spacing of a frequency band. When M=1, it may be understood as that the signal occupies contiguous subcarriers in frequency domain, that is, the signal is contiguously mapped to the frequency band.

Particularly, expressions such as "the comb is M", "a comb value (comb value) is M", "the comb size is M", "a comb spacing is M", and "an M-sized comb" may be understood as a same meaning.

11. Multipath aliasing: may also be referred to as spectral aliasing, and is a spectral distortion phenomenon caused due to mixing of a high-frequency component into a low-frequency component when a sampling frequency is lower than a Nyquist frequency (undersampling). In embodiments of this application, the multipath aliasing may also be understood as delay spectral aliasing. When undersampling occurs in frequency domain, a long-range target and a short-range target are aliased in delay domain.

12. Reflected signal: is a signal reflected back to a receiver after a reference signal is transmitted to a sensing target object. "Reflection" herein includes reflection, scattering, diffraction, and the like of an electromagnetic wave.

In a sensing scenario, different service requirements have corresponding performance requirements on a maximum unambiguous ranging range $R_{max}$, a maximum unambiguous velocity measurement range $V_{max}$, and a ranging resolution $\Delta R$. For example, at a carrier frequency of 60 GHz, if an unambiguous velocity measurement range $V_{max}$ of 1 m/s and a ranging resolution $\Delta R$ of 0.1 m need to be implemented, a time domain interval $T_P$ for sending a reference signal is not greater than 2.5 ms, and a bandwidth $B$ is 1.5 GHz; or if a maximum unambiguous ranging range $R_{max}$ of 150 m needs to be implemented, a frequency domain interval $\Delta f$ for sending a reference signal is at most 1 MHz, and when a subcarrier spacing is 480 kHz, a comb size used by the reference signal may be 2.

As shown in FIG. 2, an embodiment of a reference signal sending method provided in an embodiment of this application includes the following steps.

201: A first apparatus sends a first reference signal, where the first reference signal is mapped to a first frequency band by using a first comb whose size is M, and M is a positive integer.

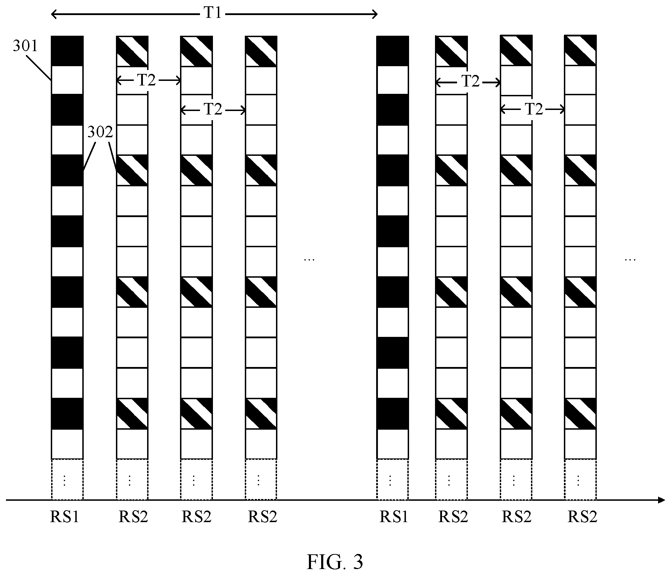

Refer to FIG. 3. Reference signals are sent in a time sequence. In a scenario shown in FIG. 3, a subcarrier 301 represents an unoccupied subcarrier/RE on a frequency band, and a subcarrier 302 represents an occupied subcarrier/RE on the frequency band. The first apparatus first sends one first reference signal RS1 that is used to perform maximum unambiguous ranging and whose comb size is small.

For example, the RS1 uses a 2-sized comb. To achieve a ranging resolution of 0.1 m in a service requirement, a bandwidth of the RS1 is not less than 1.5 GHz. A value of $M$ needs to satisfy only a maximum unambiguous ranging range of the service requirement, and a specific value is not limited herein.

202: The first apparatus periodically sends a second reference signal, where the second reference signal is mapped to a second frequency band by using a second comb whose size is N, a bandwidth of the second frequency band is the same as a bandwidth of the first frequency band, and N>M.

After sending one RS1, the first apparatus periodically sends, at a time interval of T2, the second reference signal RS2 whose comb size is large.

It should be noted that, in this embodiment of this application, "sending one reference signal" and "sending a reference signal once" may be understood as a same meaning. "Sending one reference signal/sending a reference signal once" may occupy one symbol in time domain, or may consecutively occupy a plurality of symbols to improve a received signal-to-noise ratio. For example, "sending one reference signal/sending a reference signal once" may occupy one symbol group, one mini-slot, or one slot in time domain.

Optionally, each reference signal may be generated based on at least one sequence, and the sequence may be, for example, a ZC sequence, an m sequence, or a Gold sequence.

For example, the RS2 uses a 4-sized comb, T2 is 2.5 ms, and the first frequency band and the second frequency band are a same frequency band. A specific value of N needs to satisfy only the foregoing agreement, and the specific value is not limited herein. A value of T2 needs to satisfy only a maximum unambiguous velocity measurement range of a service requirement, and a specific value is not limited herein.

Particularly, the first frequency band and the second frequency band may alternatively be different frequency bands, provided that the bandwidth of the first frequency band is the same as the bandwidth of the second frequency band. It may be understood that, when a difference between the bandwidth of the first frequency band and the bandwidth of the second frequency band is extremely small, a ranging resolution of the RS1 is approximately equal to a ranging resolution of the RS2. Therefore, "the bandwidth of the first frequency band is the same as the bandwidth of the second frequency band" includes that there is a slight error between the bandwidth of the first frequency band and the bandwidth of the second frequency band.

Particularly, the first reference signal and the second reference signal may be sensing reference signals, or may be signals of another type, for example, positioning reference signals or communication signals.

Particularly, in this embodiment of this application, it is recommended that the value of N be an integer multiple of the value of M. Such a value setting manner helps perform matching calculation between unambiguous ranging results and unambiguous velocity measurement results in a multi-target scenario.

Particularly, when the value of N is an integer multiple of the value of M, a time interval between a sending moment of the RS1 and a sending moment of a 1st RS2 may be equal to T2. In this way, that the RS1 and the RS2 occupy REs of a same subcarrier may be considered as one sending of the periodic signal RS2, and may be used for unambiguous velocity measurement.

Specifically, if position and velocity changes of a sensing target need to be continuously obtained, a 2nd RS1 is sent after a time interval T1 after a 1st RS1 is sent, where T1 is time in which no obvious range change occurs on the sensing target. For example, at a ranging resolution of 0.1 m and a moving velocity of 1 m/s, a ranging result of the sensing target usually does not change within time of 0.1/1=0.1 s=100 ms.

It may be understood that the foregoing is merely an example. In actual application, due to different service requirements, needed maximum unambiguous ranging ranges $R_{max}$, needed maximum unambiguous velocity measurement ranges $V_{max}$, and needed ranging resolutions $\Delta R$ may also be different. Actually, when a reference signal is sent, a comb size used by the reference signal, a bandwidth of the reference signal, and a sending periodicity of the RS2 all change correspondingly. This is not specifically limited herein.

It should be noted that the "RS1" and the "RS2" are merely general terms for the sent first reference signal and the sent second reference signal, and do not specifically refer to one or some reference signals. In actual application, the sent reference signals may also be referred to as other names instead of the "RS1" and the "RS2". This is not specifically limited herein. In this embodiment of this application, the "RS1" and the "RS2" are merely used as an example for description.

In embodiments of this application, the following focuses on explaining how to implement one-to-one matching between ranging results and velocity measurement results of a plurality of targets in the foregoing reference signal sending method.

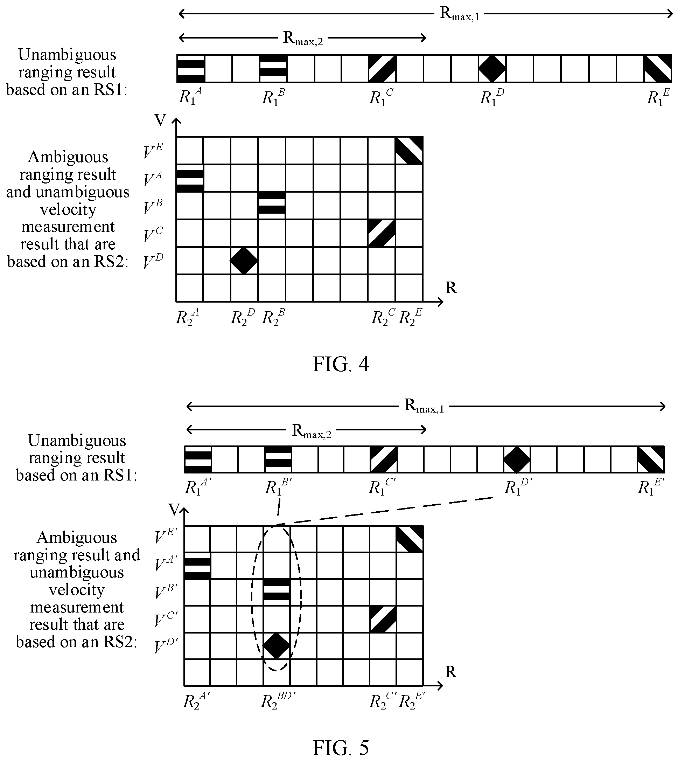

Refer to FIG. 4. An unambiguous ranging result may be obtained based on the RS1. Different lattice points represent different ranges, a lattice point with a pattern represents that a target is detected at the range, and different patterns represent different targets. When the RS2 is used to perform unambiguous velocity measurement, an ambiguous ranging result may be further obtained. In the figure, a measurement result based on the RS2 may be represented as a two-dimensional range-velocity graph (R-V graph), where a horizontal axis represents a range, a vertical axis represents a velocity, and a lattice point with a pattern represents that a target is detected at the range and the velocity. Because a bandwidth of the RS2 is the same as the bandwidth of the RS1, ranging resolutions of the RS1 and the RS2 are the same, that is, in ranging results based on the RS1 and the RS2, unit ranges represented by all lattice points are the same.

It may be understood that, a bandwidth of a reference signal affects a ranging resolution. However, in actual application, even if there is a slight error between the bandwidth of the RS1 and the bandwidth of the RS2, matching between the unambiguous ranging result based on the RS1 and an unambiguous velocity measurement result based on the RS2 is not affected.

The RS1 uses a small comb, and a maximum unambiguous ranging range $R_{max,\,1}$ corresponding to the RS1 already covers a target range needed by a service in a sensing scenario. When a ranging error is not considered, the unambiguous ranging result $R_1$ obtained based on the RS1 may represent a real range of a target. The RS2 uses a large comb, a maximum unambiguous ranging range corresponding to the RS2 is small, and ranging results may be ambiguous (for example, a target D and a target E in FIG. 4). If the ambiguous ranging result obtained based on the RS2 is $R_2$, a correspondence between $R_1$ and $R_2$ is described in Formula (1):

$$R_1 = R_2 + K * R_{max,\,2}, \text{ where } K = 0, 1, \ldots, \left\lfloor \frac{R_{max,\,1}}{R_{max,\,2}} \right\rfloor \quad (1)$$

$R_{max,\,2}$ represents the maximum unambiguous ranging range corresponding to the RS2, and may also be referred to as ambiguity, and K is a nonnegative integer.

For each target, if a unique value of K can be found to make Formula (1) workable, $R_2$ corresponding to a ranging result $R_1$ that is of the target and that is based on the RS1 may be determined.

An unambiguous velocity measurement result $V$ of each target may be further obtained based on the RS2. First, the unambiguous ranging result $R_1$ based on the RS1 is matched with the ambiguous ranging result $R_2$ based on the RS2 according to Formula (1), to further implement matching between the unambiguous ranging result $R_1$ based on the RS1 and the unambiguous ranging and velocity measurement result V based on the RS2.

For example, as shown in FIG. 4, five unambiguous ranging results: $R_1^A$, $R_1^B$, $R_1^C$, $R_1^D$, and $R_1^E$ are obtained based on a measurement result based on the RS1, and five ambiguous ranging results and corresponding unambiguous velocity measurement results: $(R_2^A, V^A)$, $(R_2^B, V^B)$, $(R_2^C, V^C)$, $(R_2^D, V^D)$, and $(R_2^E, V^E)$ are obtained based on the measurement result based on the RS2. In this case, for a target A, a target B, and a target C, a unique value of K may be determined, and when K=0, Formula (1) is satisfied. For the target D and the target E, a unique value of K may be determined, and when K=1, Formula (1) is satisfied. Therefore, an unambiguous ranging result $R_1$ and an unambiguous velocity measurement result $V$ of each target may be obtained.

It should be noted that, a ranging result of the sensing target may be understood as being obtained by estimating a delay of each path in channel state information by using a received reflected signal and a transmitted reference signal, and a velocity measurement result of the sensing target may be understood as being obtained by estimating Doppler of each path in the channel state information by using the received reflected signal and the transmitted reference signal.

Specifically, in a self-sending and self-receiving scenario, the delay of each path is determined by a range between the sensing target and the first apparatus, and the ranging result of the sensing target may be understood as the range between the sensing target and the first apparatus.

Specifically, in a self-sending and other-receiving scenario, the delay of each path is determined by a range between the sensing target and the first apparatus and a range between the sensing target and a second apparatus, the ranging result of the sensing target may be understood as a sum of the range between the sensing target and the first apparatus and the range between the sensing target and the second apparatus.

In embodiments of this application, the RS2 whose comb size is large is used to perform velocity measurement on the sensing target, so that subcarrier occupation is reduced in frequency domain, and reference signal overheads are reduced while a detection requirement of the sensing target is satisfied.

However, in some cases, multipath aliasing may occur, due to ambiguity, in the ranging results that are based on the RS2. As shown in FIG. 5, aliasing occurs in ranging results that are of the target B and the target D and that are based on the RS2. In this case, for the target B and the target D, unambiguous ranging results based on the RS1 are $R_1^{B'}$ and $R_1^{D'}$, ambiguous ranging results based on the RS2 are $R_2^{BD'}$, and two velocity measurement results are respectively $V^{B'}$ and $V^{D'}$. In this case, for the target B and the target D, there are two values of K to make Formula (1) workable. For example, when K=0, $R_1^{B'}=R_2^{BD'}$; or when K=1, $R_1^{D'}=R_2^{BD'}$. Therefore, there are two cases for matching between the unambiguous ranging result and the unambiguous velocity measurement result, that is, $\left(R_1^{B'}, V^{B'}\right)$ and $\left(R_1^{D'}, V^{D'}\right)$, or $\left(R_1^{B'}, V^{D'}\right)$ and $\left(R_1^{D'}, V^{B'}\right)$.

To resolve a problem that unambiguous ranging results and unambiguous velocity measurement results cannot be matched one by one, a reason why multipath aliasing occurs in RS2 ranging needs to be first analyzed.

It is assumed that the RS1 uses an M-sized comb, the RS2 uses an N-sized comb, N>M, a frequency domain interval of the RS1 is $\Delta f_1 = M\Delta f_0$, a frequency domain interval of the RS2 is $\Delta f_2 = N\Delta f_0$, and $\Delta f_0$ may be considered as an SCS or a frequency domain interval between two subcarriers with adjacent indexes in a same resource pool. The unambiguous ranging range corresponding to ranging performed by using the RS1 is $R_{max,1} = \dfrac{c}{2\Delta f_1} = \dfrac{c}{2M\Delta f_0}$, and the unambiguous ranging range corresponding to ranging performed by using the RS2 is $R_{max,2} = \dfrac{c}{2\Delta f_2} = \dfrac{c}{2N\Delta f_0}$. The RS1 and the RS2 have a same bandwidth B, that is, $B = S_1\Delta f_1 = S_2\Delta f_2 = S_1 M\Delta f_0 = S_2 N\Delta f_0$, and the ranging resolutions $\Delta R$ of the RS1 and the RS2 are equal, that is, $\Delta R = \dfrac{c}{2B} = \dfrac{c}{2S_1 M\Delta f_0} = \dfrac{c}{2S_2 N\Delta f_0}$, where $S_1$ and $S_2$ respectively represent quantities of subcarriers/REs occupied for sending the RS1 and the RS2 once in the bandwidth B, and $S_1$ and $S_2$ are both nonnegative integers.

It is assumed that ranging results that are of a target x and a target y and that are based on the RS1 are respectively $R^x$ and $R^y$, and a difference between $R^x$ and $R^y$ is $t\Delta R$, where t=1, 2, ..., or $S_1$ - 1. When the difference between $R^x$ and $R^y$ is exactly an integer multiple of the maximum unambiguous ranging range $R_{max,2}$ of the RS2, that is, $t\Delta R\% R_{max,2} = 0$, ranging results that are of $R^x$ and $R^y$ and that are based on the RS2 are the same, that is, $R^x\% R_{max,2} = R^y\% R_{max,2}$. In this case, aliasing occurs in the ranging results that are of the target x and the target y and that are based on the RS2.

For example, the ranging results that are of the target x and the target y and that are based on the RS1 are respectively 5 m and 80 m, the maximum unambiguous ranging range $R_{max,2}$ of the RS2 is 75 m, and the ranging results $R_2$ that are of the target x and the target y and that are based on the RS2 are both presented as 5 m. In other words, for $R_{max,2}$, $R^x$ and $R^y$ have a same remainder 5. In this case, matching between an unambiguous ranging result and an unambiguous velocity measurement result cannot be implemented for the target x and the target y.

It can be learned from the foregoing analysis that multipath aliasing occurs because a range difference between two targets is an integer multiple of the maximum unambiguous ranging range $R_{max,2}$ of the RS2.

For this problem, embodiments of this application provide two solutions.

I. Determine another $R_{max}$, so that a range difference between any two targets does not have an integer multiple relationship with both of the two $R_{max}$.

Because the range difference between the two targets in an actual scenario cannot be restricted, it needs to be ensured that the unambiguous ranging results and the unambiguous velocity measurement results can be matched one by one under any range difference. To achieve this objective, embodiments of this application propose to send another RS3 whose comb size is different from that of the RS2. Provided that a greatest common divisor between the comb size N used by the RS2 and a comb size X used by the RS3 is not greater than the comb size M used by the RS1, the range difference between any two targets may not have an integer multiple relationship with both of the maximum unambiguous ranging range $R_{max,\,2}$ of the RS2 and a maximum unambiguous ranging range $R_{max,\,3}$ of the RS3. In other words, in the sensing scenario, not all ambiguous ranging results of any two targets based on the RS2 and ambiguous ranging results based on the RS3 are aliased, to further ensure one-to-one matching between the unambiguous ranging results and the unambiguous velocity measurement results in the multi-target scenario.

A proof process is as follows:

A target may be considered as: "For any range difference $t\Delta R$, $t\Delta R\%R_{max,\,2}\neq 0$ or $t\Delta R\%R_{max,\,3}\neq 0$ is satisfied". To solve a condition for making the target workable, a condition for making "$t$ has a value to make $t\Delta R\%R_{max,\,2}=0$ and $t\Delta R\%R_{max,\,3}=0$" workable is first solved. Because the RS2 and the RS3 occupy the same bandwidth B as the RS1, the RS2, the RS3, and the RS1 have the same ranging resolution $\Delta R = \dfrac{C}{2B} = \dfrac{C}{2S_1 M\Delta f_0} = \dfrac{C}{2S_2 N\Delta f_0} = \dfrac{C}{2S_3 X\Delta f_0}$, where $S_2$ represents a quantity of subcarriers/REs occupied for sending the RS2 once in the bandwidth $B$, $S_3$ represents a quantity of subcarriers/REs occupied for sending the RS3 once in the bandwidth $B$, and $S_2$ and $S_3$ are both nonnegative integers.

The maximum unambiguous ranging ranges for the RS2 and the RS3 are respectively $R_{max,\,2} = \dfrac{C}{2N\Delta f_0}$ and $R_{max,\,3} = \dfrac{C}{2X\Delta f_0}$. It can be learned from the expressions of $\Delta R$, $R_{max,\,2}$, and $R_{max,\,3}$ that $R_{max,\,2} = S_2\Delta R$ and $R_{max,\,3} = S_3\Delta R$.

Therefore, making "$t\Delta R\%R_{max,\,2}=0$ and $t\Delta R\%R_{max,\,3}=0$" workable may be equivalent to making "$t\%S_2=0$ and $t\%S_3=0$" workable. Considering a value range of $t$ is $\{1,2,...,S_1-1\}$, to solve a condition for making "$t$ has a value to make $t\%S_2=0$ and $t\%S_3=0$" workable, only $S_1-1\geq$ a least common multiple of $(S_2, S_3)$, that is, $S_1 >$ a least common multiple of $(S_2, S_3)$, needs to be set.

Therefore, to make "for any range difference $t\Delta R$, $t\Delta R\%R_{max,\,2}\neq 0$ or $t\Delta R\%R_{max,\,3}\neq 0$ is satisfied" workable, $S_1\leq$ the least common multiple of $(S_2, S_3)$ needs to be ensured. It is assumed that $A = S_1 M = S_2 N = S_3 X$. In this case, $\dfrac{A}{M}\leq$ a least common multiple of $\left(\dfrac{A}{N},\dfrac{A}{X}\right)$ needs to be ensured. Further, it is assumed that p is a greatest common divisor of $(N, X)$, and $N = pn_1$ and $X = pn_2$ may be obtained, where $n_1$ and $n_2$ are relatively prime, and $pn_1n_2$ is a least common multiple of $(N, X)$. It is assumed that $q$ is a greatest common divisor of $(M, pn_1n_2)$, and $M = qm$ may be obtained. Considering that $A$ is a common multiple of $(M, N, X)$, and $A = Zmpn_1n_2$, $\dfrac{A}{M} = \dfrac{Zpn_1n_2}{q}$, $\dfrac{A}{N} = Zmn_2$, and $\dfrac{A}{X} = Zmn_1$. Because $n_1$ and $n_2$ are relatively prime, the least common multiple of $\left(\dfrac{A}{N},\dfrac{A}{X}\right)$ may be written as $Zmn_1n_2$.

Therefore, $\dfrac{A}{M}\leq$ the least common multiple of $\left(\dfrac{A}{N},\dfrac{A}{X}\right)$ may be represented as $p\leq qm$. In other words, the greatest common divisor of $(N, X)\leq M$. The foregoing related symbols p, $n_1$, $n_2$, $q$, $m$, $Z$, and the like are all positive integers.

It can be learned from the foregoing proof that, when the greatest common divisor of the two large combs: the N-sized comb and the X-sized comb used by the RS2 and the RS3 is less than or equal to the small comb: the M-sized comb used by the RS1, one-to-one matching between unambiguous ranging results and unambiguous velocity measurement results of a plurality of targets can be implemented based on the two types of reference signals mentioned in the present invention.

Specifically, when a value of M is 1, values of N and X are relatively prime.

Particularly, frequency domain sending intervals of the RS2 and the RS3 may be set to be always integer multiples of a frequency domain sending interval of the RS1. In other words, N=$Z_1$M, and X=$Z_2$M, where $Z_1$ and $Z_2$ are both positive integers. In this case, the foregoing constraint condition may be changed to that $Z_1$ and $Z_2$ are relatively prime. For example, when the value of M is 2, (N, X)=(4, 6), (N, X)=(6, 8), (N, X)=(4, 10), or the like. When the value of M is 3, (N, X)=(6, 9), (N, X)=(9, 12), (N, X)=(6, 15), or the like. Such a value setting manner helps perform matching calculation between the unambiguous ranging results and the unambiguous velocity measurement results in the multi-target scenario.

It should be noted that, in the self-sending and other-receiving scenario, the range measured based on the reference signal may be understood as the sum of the range between the sensing target and the first apparatus and the range between the sensing target and the second apparatus. In this case, the ranging resolution and the maximum unambiguous ranging range may be represented as $\dfrac{C}{B}$ and $\dfrac{C}{\Delta f}$. It may be understood that the foregoing proof process and conclusion are still applicable to this scenario.

The RS2 and the RS3 are sent in two methods:

1. Send, on different symbols, the RS2 using the N-sized comb and the RS3 using the X-sized comb.

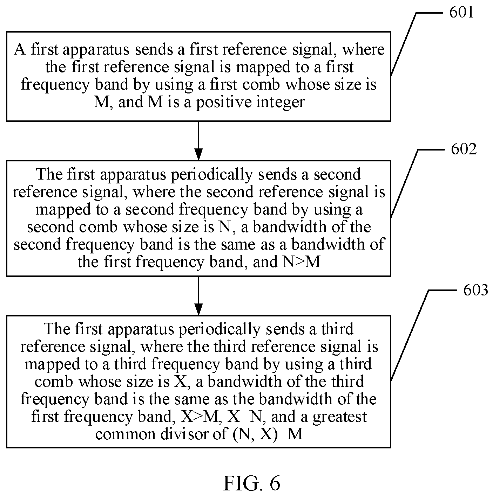

Refer to FIG. 6. An embodiment of a reference signal sending method provided in an embodiment of this application includes the following steps.

601: A first apparatus sends a first reference signal, where the first reference signal is mapped to a first frequency band by using a first comb whose size is M, and M is a positive integer.

602: The first apparatus periodically sends a second reference signal, where the second reference signal is mapped to a second frequency band by using a second comb whose size is N, a bandwidth of the second frequency band is the same as a bandwidth of the first frequency band, and N>M.

Step 601 and step 602 in this embodiment are similar to step 201 and step 202 in the embodiment shown in FIG. 2. Details are not described herein again.

603: The first apparatus periodically sends a third reference signal, where the third reference signal is mapped to a third frequency band by using a third comb whose size is X, a bandwidth of the third frequency band is the same as the bandwidth of the first frequency band, X>M, X≠N, and a greatest common divisor of (N, X)≤M.

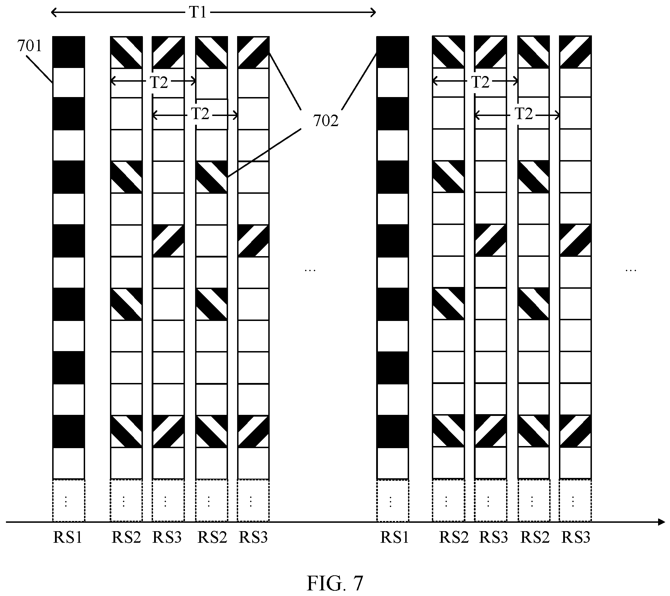

Refer to FIG. 7. Reference signals are sent in a time sequence. In a scenario shown in FIG. 7, a subcarrier 701 represents an unoccupied subcarrier/RE on a frequency band, and a subcarrier 702 represents an occupied subcarrier/RE on the frequency band.

After one RS1 is sent, the second reference signal RS2 and the third reference signal RS3 whose comb sizes are large are periodically sent at a time interval T2, where the greatest common divisor of the comb size of the RS2 and the comb size of the RS3 is less than or equal to the comb size of the RS1.

For example, the RS3 uses a 6-sized comb, T2 is 2.5 ms, the first frequency band, the second frequency band, and the third frequency band are a same frequency band, and a greatest common divisor of a comb size "4" of the RS2 and the comb size "6" of the RS3 is 2, and is not greater than a comb size "2" of the RS1, where values of M, N, and X need to satisfy only the foregoing agreement, and specific values are not limited herein.

Particularly, the first frequency band, the second frequency band, and the third frequency band may alternatively be different frequency bands, provided that the bandwidths of the three frequency bands are the same. It may be understood that, when a bandwidth difference between every two of the three frequency bands is extremely small, ranging resolutions of the RS1, the RS2, and the RS3 are approximately equal. Therefore, "the bandwidths of the three frequency bands are the same" includes "there is a slight error between bandwidths of every two of the three frequency bands".

It should be noted that the "RS1", the "RS2", and the "RS3" are merely general terms for the sent first reference signal, the sent second reference signal, and the sent third reference signal, and do not specifically refer to one or some reference signals, and do not limit a sending sequence. In actual application, the sent reference signals may also be referred to as other names instead of the "RS1", the "RS2", and the "RS3". This is not specifically limited herein. In this embodiment of this application, the "RS1", the "RS2", and the "RS3" are merely used as an example for description.

It may be understood that a bandwidth of a reference signal affects a ranging resolution. In actual application, even if there is a slight error between the bandwidth of the RS1 and the bandwidth of the RS2 or the RS3, matching between an unambiguous ranging result based on the RS1 and an unambiguous velocity measurement result based on the RS2 or an unambiguous velocity measurement result based on the RS3 is not affected.

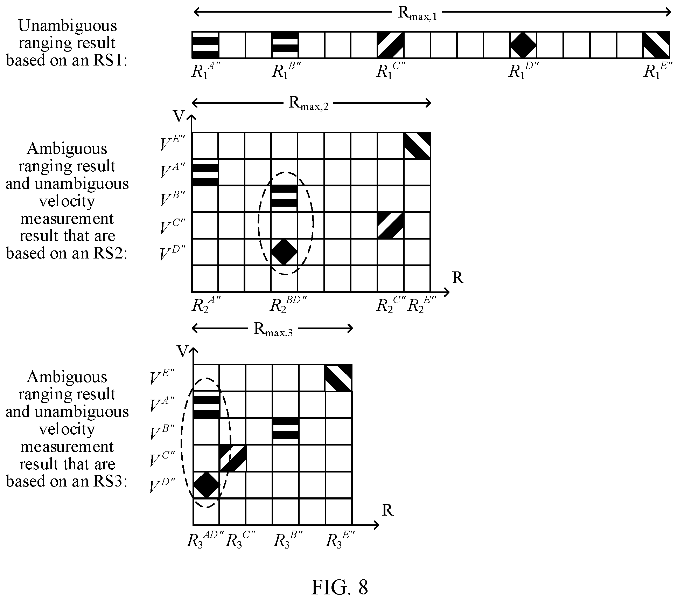

For example, refer to FIG. 8. A maximum unambiguous ranging range of the RS3 is $R_{max, 3}$, and values of $R_{max, 3}$ and $R_{max, 2}$ are different. In this case, multipath aliasing occurs in ranging results that are of a target B and a target D and that are based on the RS2. However, no multipath aliasing occurs in ranging results that are of the target B and the target D and that are based on the RS3 while multipath aliasing occurs in ranging results that are of a target A and the target D and that are based on the RS3. It can be learned from the foregoing proof process that, if aliasing occurs in ranging results that are of paths corresponding to any two targets and that are based on the RS2, aliasing definitely does not occur in ranging results that are based on the RS3, and vice versa. Therefore, a unique velocity measurement result may be obtained when an intersection set of two preliminary matching result sets is obtained.

Specifically, five unambiguous ranging results: $R_1^{A''}$, $R_1^{B''}$, $R_1^{C''}$, $R_1^{D''}$, and $R_1^{E''}$ are obtained based on the RS1, ambiguous ranging results and corresponding unambiguous velocity measurement results: $\left(R_2^{A''}, V^{A''}\right)$, $\left(R_2^{BD''}, V^{B''}\right)$, $\left(R_2^{C''}, V^{C''}\right)$, $\left(R_2^{BD''}, V^{D''}\right)$, and $\left(R_2^{E''}, V^{E''}\right)$ are obtained based on the RS2, and ambiguous ranging results and corresponding unambiguous velocity measurement results: $\left(R_3^{AD''}, V^{A''}\right)$, $\left(R_3^{B''}, V^{B''}\right)$, $\left(R_3^{C''}, V^{C''}\right)$, $\left(R_3^{AD''}, V^{D''}\right)$, and $\left(R_3^{E''}, V^{E''}\right)$ are obtained based on the RS3.

In this case, for the target B whose ranging result based on the RS2 is aliased, an unambiguous ranging result and an unambiguous velocity measurement result $\left(R_1^{B''}, V^{B''}\right)$ of the target B may be obtained through matching between a ranging result based on the RS1 and a ranging result based on the RS3. For the target A whose ranging result based on the RS3 is aliased, an unambiguous ranging result and an unambiguous velocity measurement result $\left(R_1^{A''}, V^{A''}\right)$ of the target A may be obtained through matching between a ranging result based on the RS1 and a ranging result based on the RS3. For the target D whose ranging result based on the RS2 and ranging result based on the RS3 are both aliased, a preliminary matching result set $\left\{\left(R_1^{D''}, V^{B''}\right), \left(R_1^{D''}, V^{D''}\right)\right\}$ between the RS1 and the RS2 and a preliminary matching result set $\left\{\left(R_1^{D''}, V^{A''}\right), \left(R_1^{D''}, V^{D''}\right)\right\}$ between the RS1 and the RS3 may be first obtained, and an intersection set of the two preliminary matching sets is obtained, to obtain a unique unambiguous ranging result and unambiguous velocity measurement result $\left(R_1^{D''}, V^{D''}\right)$ of the target D.

To ensure consistency between velocity measurement results that are based on the RS2 and the RS3, each RS3 may correspond to one RS2, and a time interval between sending one RS2 and sending an RS3 corresponding to the RS2 cannot be excessively long, that is, cannot be within a time range in which a ranging result of a sensing target changes significantly. For example, the RS2 and the RS3 may be sent on different symbols in a same slot, or sent in adjacent slots. This is not limited herein in this application.

In this embodiment of this application, each time the first apparatus sends one RS2 and one corresponding RS3, the RS2 and the corresponding RS3 may be considered as a group of sent reference signals that can be for resolving multi-target multipath aliasing. Compared with a method for directly and periodically sending the RS1 in conventional technologies, the reference signal sending method in this embodiment of this application can also reduce reference signal overheads.

For example, a value of (M, N, X) is (2, 4, 6). Without loss of generality, it is considered that a transmit bandwidth is 24 subcarriers, subcarrier sequence numbers are 0, 1, ..., and 23, sending one RS1 occupies 12 subcarriers (0, 2, 4, 6, 8, 10, 12, 14, 16, 18, 20, and 22), and sending a group of RS2 and RS3 occupies 10 subcarriers (0, 4, 8, 12, 16, and 20) and (0, 6, 12, and 18) in total. Compared with sending one RS1, sending a group of RS2 and RS3 may reduce overheads by about 16.7% ((12-10)/12). It may be understood that an actual transmit bandwidth is large, but a proportion of reduced overheads almost does not change with a change of the bandwidth.

2. Send, on a same symbol, the RS2 using the N-sized comb and the RS3 using the X-sized comb.

Further, the RS2 and the RS3 may be sent on the same symbol. It should be noted that, in this sending manner, to reduce reference signal overheads, the RS2 and the RS3 need to be mapped to a same frequency band, in other words, the second frequency band and the third frequency band are the same, and the RS2 and the RS3 correspond to a same start subcarrier for mapping, which may also be understood as that comb offsets (comb offsets) are the same. In this case, the RS3 may be considered as a part of the RS2, that is, the RS2 uses two different combs: the N-sized comb and the X-sized comb.

Optionally, when the RS2 uses two different combs: the N-sized comb and the X-sized comb, it may be understood as that the first apparatus generates two sub reference signals RS21 and RS22 respectively based on two different sequences, the RS21 and the RS22 are mapped to a same frequency band respectively by using the N-sized comb and the X-sized comb, and the RS21 and the RS22 jointly form the RS2.

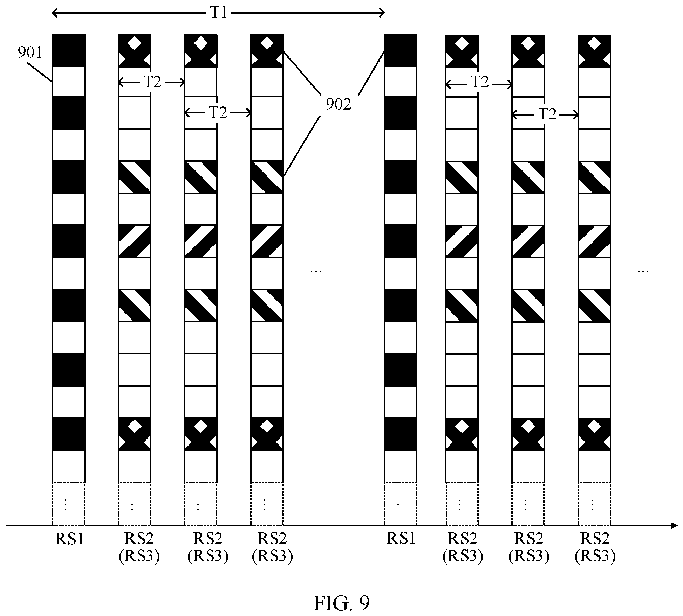

As shown in FIG. 9, reference signals are sent in a time sequence. In a scenario shown in FIG. 9, a subcarrier 901 represents an unoccupied subcarrier/RE on a frequency band, and a subcarrier 902 represents an occupied subcarrier/RE on the frequency band.

For example, a value of (M, N, X) is (2, 4, 6). Without loss of generality, it is considered that a transmit bandwidth is 24 subcarriers, subcarrier sequence numbers are 0, 1, ..., and 23, and sending one RS1 occupies 12 subcarriers (0, 2, 4, 6, 8, 10, 12, 14, 16, 18, 20, and 22). In this case, the RS2 uses two combs whose sizes are 4 and 6, sending one RS2 occupies eight subcarriers (0, 4, 6, 8, 12, 16, 18, and 20), the 4-sized comb and the 6-sized comb that are used by the RS2 correspond to a same start subcarrier for mapping, that is, a comb offset=0, and a subcarrier numbered as a common multiple of the two sizes may be considered as being repeatedly occupied. Compared with sending one RS1, sending one RS2 may reduce overheads by about 33.3% ((12-8)/12).

Compared with sending the RS2 and the RS3 respectively on different symbols, this combined sending manner can further reduce reference signal overheads. When receiving the reference signal sent in combination, a result in FIG. 8 may be obtained provided that a receiver separately processes the received signal based on the size N and the size X.

It should be noted that in some special scenarios, for example, in a sidelink scenario, time-frequency resources are always allocated/selected for use in a resource pool, and a resource indication manner is limited. One or more available comb mapping manners may be (pre)configured for the resource pool. To send the reference signal in this embodiment of this application, a comb size that can be used for the resource pool may be (pre)configured by using a common multiple of (M, N, X).

For example, (M, N, X) is (2, 6, 8). The resource pool may be (pre)configured to use a 24-sized comb. In this way, a signal may be sent at a frequency domain interval corresponding to the 2/6/8-sized comb. For example, all 12 groups of subcarrier sets that use a 24-sized comb and in which comb offsets=0, 2, 4, ..., and 22 may be occupied for sending the RS1. For example, reference signals with the N-sized comb and the X-sized comb are sent on a same symbol. All six groups of subcarrier sets that use a 24-sized comb and in which comb offsets=0, 6, 8, 12, 16 and 18 may be occupied for sending the RS2. In this way, the RS2 may be mapped by using both the 6-sized comb and the 8-sized comb, to further reduce reference signal overheads.

In addition, in the sidelink scenario, alternatively, some slots in the resource pool may be (pre)configured to use the M-sized comb, some slots may be (pre)configured to use the N-sized comb, and some slots may be (pre)configured to use the X-sized comb; or some symbols in the resource pool may be (pre)configured to use the M-sized comb, some symbols may be (pre)configured to use the N-sized comb, and some symbols may be (pre)configured to use the X-sized comb. In this way, corresponding slots/symbols may be respectively selected for sending the RS1, the RS2, and the RS3.

For example, a 1st symbol to a 4th symbol in each slot of the resource pool may be (pre)configured to use the M-sized comb, a 5th symbol to an 8th symbol may be (pre)configured to use the N-sized comb, and a 9th symbol to a 12th symbol may be (pre)configured to use the X-sized comb.

It may be understood that, regardless of whether the resource pool is limited, a manner of sending the reference signal in this embodiment of this application is not changed.

Particularly, this embodiment of this application mainly resolves ranging and velocity measurement problems in the multi-target scenario. However, the provided solution is still applicable to a single-target scenario. After the single-target scenario is determined, the RS2 may be simplified to include only one large comb structure, and is used only for velocity measurement. A combination of an unambiguous ranging result obtained based on the RS1 and an unambiguous velocity measurement result obtained based on the RS2 is a range and a velocity of the target, and no mismatch occurs.

In addition, in this embodiment of this application, a method in which the RS2 includes more than two comb sizes is not excluded. To be specific, the RS2 may use two or more comb structures, provided that a greatest common divisor of any two comb sizes in the two or more comb structures is not greater than M.

In addition to the foregoing solution, an embodiment of this application further provides another solution.

II. Determine one $R_{max}$ having no integer multiple relationship with a range difference between any two targets.

It can be learned from the foregoing derivation process that aliasing occurs mainly because a range difference between two targets is an integer multiple of the unambiguous ranging range $R_{max, 2}$ of the RS2, that is, whether multipath aliasing occurs depends on a real range of each target and a comb used by the RS2. If the range of each target may be obtained before the RS2 is sent, a large comb that does not cause multipath aliasing may be selected as the comb of the RS2 for sending.

The reference signal sending method provided in embodiments of this application may be performed by the foregoing access network device or terminal device, or may be performed by a chip in the foregoing access network device or terminal device. The following describes the reference signal sending method in this application with reference to the accompanying drawings.

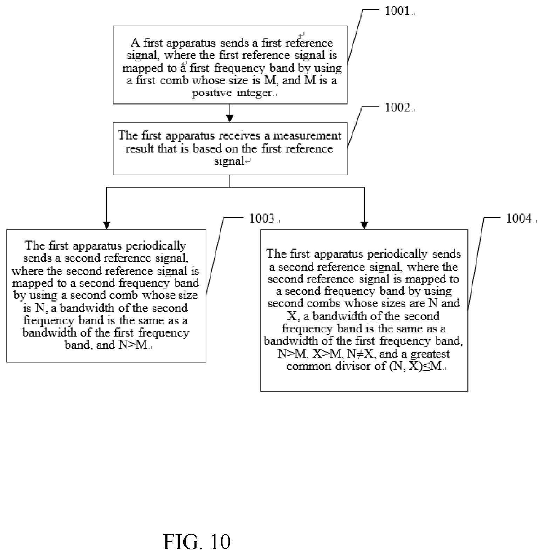

Refer to FIG. 10. An embodiment of a reference signal sending method provided in an embodiment of this application includes the following steps.

1001: A first apparatus sends a first reference signal, where the first reference signal is mapped to a first frequency band by using a first comb whose size is M, and M is a positive integer.

Step 1001 in this embodiment is similar to step 601 in the embodiment shown in FIG. 6. Details are not described herein again.

1002: The first apparatus receives a measurement result that is based on the first reference signal.

After the RS1 is sent, an RS2 is not directly sent, but an unambiguous ranging result based on the RS1 is first received. Range differences tΔR between all targets in a sensing scenario are analyzed, to select a comb size N of the RS2 that causes none of tΔR to satisfy $tΔR\%R_{max, 2} = 0$, and then step 1003 is performed.

In a self-sending and self-receiving scenario, after receiving the unambiguous ranging result that is based on the RS1, the first apparatus may autonomously adjust the comb size used by the RS2.

In a self-sending and other-receiving scenario, a second apparatus needs to send, after receiving a reflected signal, indication information to the first apparatus that sends the reference signal. The indication information may be a sum of ranges between all sensing targets and the first apparatus and ranges between all the sensing targets and the second apparatus, or the indication information may be a range difference between every two sensing targets (in a multi-target scenario). Alternatively, the second apparatus may independently analyze a ranging result, and the indication information may be a value of the comb size N that does not cause multipath aliasing. Alternatively, the receiving apparatus reports the result to a server, and then the server sends the indication information to the sending apparatus. A specific implementation is not limited herein.

The server in this embodiment of this application may be a location management function (location management function, LMF), or may be a sensing function (sensing function, SF). This is not specifically limited herein.

1003: The first apparatus periodically sends the second reference signal, where the second reference signal is mapped to a second frequency band by using a second comb whose size is N, a bandwidth of the second frequency band is the same as a bandwidth of the first frequency band, and N>M.

Step 1003 in this embodiment is similar to step 602 in the embodiment shown in FIG. 6. Details are not described herein again.

It may be understood that the comb size N that does not cause multipath aliasing can not be obtained in all cases. After no proper comb size N exists, step 1003 is not performed, and step 1004 is performed.

1004: The first apparatus periodically sends the second reference signal, where the second reference signal is mapped to a second frequency band by using second combs whose sizes are N and X, a bandwidth of the second frequency band is the same as a bandwidth of the first frequency band, N>M, X>M, N$\neq$X, and a greatest common divisor of (N, X)$\leq$M.

The first apparatus sends, based on the unambiguous ranging result, the RS2 including the comb sizes N and X, so that a range difference t$\Delta$R between every two targets in the sensing scenario satisfies t$\Delta$R%$R_{max,2}$$\neq$0 or t$\Delta$R%$R_{max,3}$$\neq$0, where $R_{max,2}$ is a maximum unambiguous ranging range corresponding to the comb size N, and $R_{max,3}$ is a maximum unambiguous ranging range corresponding to the comb size X.

Specifically, the RS2 whose comb size is N and an RS3 whose comb size is X may alternatively be sent on different symbols. A specific implementation is not limited herein.

In this embodiment of this application, the comb size N that does not cause multipath aliasing is determined by analyzing the ranging result that is based on the RS1, so that reference signal overheads are expected to be further reduced while an unambiguous ranging result of any target matches an unambiguous velocity measurement result.

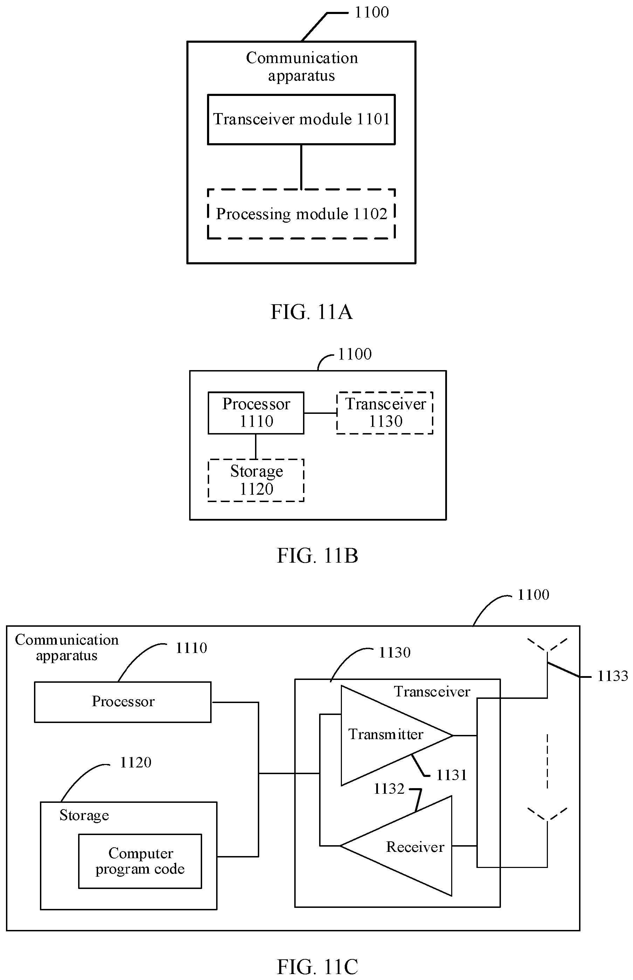

The foregoing describes the communication system and the reference signal sending method in embodiments of this application. The following describes communication apparatuses provided in embodiments of this application. FIG. 11A is a diagram of a structure of a communication apparatus according to an embodiment of this application. The communication apparatus 1100 may be configured to perform the steps in the embodiments shown in FIG. 2 to FIG. 10. For details, refer to the related descriptions in the foregoing method embodiments.

The communication apparatus 1100 includes a transceiver module 1101 and a processing module 1102. The transceiver module 1101 may implement a corresponding communication function. The processing module 1102 is configured to process data. The transceiver module 1101 may also be referred to as a communication interface or a communication unit.

Optionally, the communication apparatus 1100 may further include a storage unit. The storage unit may be configured to store instructions and/or data. The processing module 1102 may read the instructions and/or the data in the storage unit, to enable the communication apparatus to implement the foregoing method embodiments.

The communication apparatus 1100 may be configured to perform the actions in the foregoing method embodiments. The communication apparatus 1100 may be a terminal device/an access network device or a component that can be configured in the terminal device/access network device. The transceiver module 1101 is configured to perform the receiving-related operation in the foregoing method embodiments, and the processing module 1102 is configured to perform the processing-related operation in the foregoing method embodiments.

Optionally, the transceiver module 1101 may include a sending module and a receiving module. The sending module is configured to perform the sending operation in the foregoing method embodiments. The receiving module is configured to perform the receiving operation in the foregoing method embodiments.

It should be noted that the communication apparatus 1100 may include the sending module but not include the receiving module. Alternatively, the communication apparatus 1100 may include the receiving module but not include the sending module. This may be specifically determined depending on whether the foregoing solutions performed by the communication apparatus 1100 include a sending action and a receiving action.

The processing module 1102 in the foregoing embodiment may be implemented by at least one processor or processor-related circuit. The transceiver module 1101 may be implemented by a transceiver or a transceiver-related circuit. The transceiver module 1001 may also be referred to as the communication unit or the communication interface. The storage unit may be implemented by at least one storage.

An embodiment of this application further provides another communication apparatus 1100. As shown in FIG. 11B, the communication apparatus 1100 includes a processor 1110. The processor 1110 is coupled to a storage 1120. The storage 1120 is configured to store a computer program or instructions and/or data. The processor 1110 is configured to execute the computer program or the instructions and/or the data stored in the storage 1120, to enable the methods in the foregoing method embodiments to be performed.

Optionally, the communication apparatus 1100 includes one or more processors 1110.

Optionally, as shown in FIG. 11B, the communication apparatus 1100 may further include the storage 1120.

Optionally, the communication apparatus 1100 may include one or more storages 1120.

Optionally, the storage 1120 and the processor 1110 may be integrated, or separately disposed.

Optionally, as shown in FIG. 11B, the communication apparatus 1100 may further include a transceiver 1130. The transceiver 1130 is configured to receive and/or send a signal. For example, the processor 1110 is configured to control the transceiver 1130 to receive and/or send the signal.

In a solution, the communication apparatus 1100 is configured to implement the operations in the foregoing method embodiments.

For example, the processor 1110 is configured to implement the processing-related operation in the foregoing method embodiments, and the transceiver 1130 is configured to implement receiving and sending-related operations in the foregoing method embodiments.

An embodiment of this application further provides a communication apparatus 1100. The communication apparatus 1100 may be a terminal device/an access network device, or may be a chip in the terminal device/access network device. The communication apparatus 1100 may be configured to perform the operations in the foregoing method embodiments.

When the communication apparatus 1100 is a communication apparatus, FIG. 11C is a simplified diagram of a structure of a communication apparatus. As shown in FIG. 11C, the communication apparatus includes a processor, a storage, and a transceiver. The storage may store computer program code. The transceiver includes a transmitter 1131, a receiver 1132, a radio frequency circuit (not shown in the figure), an antenna 1133, and an input/output apparatus (not shown in the figure). The processor is mainly configured to: process a communication protocol and communication data, and control the communication apparatus to execute a software program, process data of the software program, and the like. The storage is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of communication apparatuses may not have the input/output apparatus.

When data needs to be sent, the processor performs baseband processing on the to-be-sent data, and then outputs a baseband signal to the radio frequency circuit. The radio frequency circuit performs radio frequency processing on the baseband signal and then sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 11C shows only one storage, one processor, and one transceiver. In an actual communication apparatus product, there may be one or more processors and one or more storages. The storage may also be referred to as a storage medium, a storage device, or the like. The storage may be disposed independent of the processor, or may be integrated with the processor. This is not limited in this embodiment of this application.

In this embodiment of this application, the antenna and the radio frequency circuit that have receiving and sending functions may be considered as a transceiver unit of the communication apparatus, and the processor having a processing function may be considered as a processing unit of the communication apparatus.

As shown in FIG. 11C, the communication apparatus includes a processor 1110, a storage 1120, and a transceiver 1130. The processor 1110 may also be referred to as a processing unit, a processing board, a processing module, a processing apparatus, or the like. The transceiver 1130 may also be referred to as a transceiver unit, a transceiver machine, a transceiver apparatus, or the like.

Optionally, a device that is in the transceiver 1130 and that is configured to implement a receiving function may be considered as a receiving unit, and a device that is in the transceiver 1130 and that is configured to implement a sending function may be considered as a sending unit. In other words, the transceiver 1130 includes a receiver and a transmitter. The transceiver sometimes may also be referred to as a transceiver machine, a transceiver unit, a transceiver circuit, or the like. The receiver sometimes may also be referred to as a receiver machine, a receiving unit, a receiving circuit, or the like. The transmitter sometimes may also be referred to as a transmitter machine, a transmitting unit, a transmitting circuit, or the like.

It should be understood that FIG. 11C is merely an example rather than a limitation. The communication apparatus including the transceiver unit and the processing unit may not depend on the structure shown in FIG. 11C.

When the communication apparatus 1100 is the chip, the chip includes a processor, a storage, and a transceiver. The transceiver may be an input/output circuit or a communication interface. The processor may be a processing unit, a microprocessor, or an integrated circuit integrated on the chip. The sending operation performed by the communication apparatus in the foregoing method embodiments may be understood as an output of the chip, and the receiving operation performed by the communication apparatus in the foregoing method embodiments may be understood as an input of the chip.

An embodiment of this application further provides a computer-readable storage medium. The computer-readable storage medium stores computer instructions for implementing the method in the foregoing method embodiments.

For example, when a computer program is executed by a computer, the computer is enabled to implement the method performed in the foregoing method embodiments.

An embodiment of this application further provides a computer program product including instructions. When the instructions are executed by a computer, the computer is enabled to implement the method performed in the foregoing method embodiments.

An embodiment of this application further provides a communication system. The communication system includes the access network device and the terminal device in the foregoing embodiments.

An embodiment of this application further provides a chip apparatus, including a processor, configured to invoke a computer program or computer instructions stored in a storage, to enable the processor to perform the methods in the embodiments shown in FIG. 2 to FIG. 10.

In a possible implementation, an input of the chip apparatus corresponds to the receiving operation in the embodiments shown in FIG. 2 to FIG. 10, and an output of the chip apparatus corresponds to the sending operation in the embodiments shown in FIG. 2 to FIG. 10.

Optionally, the processor is coupled to the storage through an interface.

Optionally, the chip apparatus further includes the storage, and the storage stores the computer program or the computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the methods in the embodiments shown in FIG. 2 to FIG. 10. The storage mentioned in any one of the foregoing descriptions may be a read-only memory (read-only memory, ROM), another type of static storage device that can store static information and instructions, a random access memory (random access memory, RAM), or the like.

It may be clearly understood by a person skilled in the art that, for convenient and brief description, for explanations and beneficial effects of related content in any communication apparatus provided above, refer to corresponding method embodiments provided above. Details are not described herein again.

In embodiments of this application, the terminal device or the access network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

It may be clearly understood by a person skilled in the art that, for convenient and brief description, for detailed working processes of the foregoing described system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, that is, may be located in one position, or may be distributed on a plurality of network units. Some or all of the units may be selected based on actual needs to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or some of the technical solutions may be implemented in a form of a software product. The computer software product is stored in a storage medium, and includes several instructions for enabling a computer device (which may be a personal computer, a server, an access network device, or the like) to perform all or some steps of the methods in embodiments of this application. The foregoing storage medium includes: any medium that can store program code, such as a USB flash disk, a removable hard disk, a read-only memory, a random access memory, a magnetic disk, or an optical disc.

**Claims**

1. A reference signal sending method, comprising:

   sending a first reference signal, wherein the first reference signal is mapped to a first frequency band by using a first comb whose size is M, and M is a positive integer; and
   periodically sending a second reference signal, wherein the second reference signal is mapped to a second frequency band by using at least one second comb, and a size of each second comb is a positive integer greater than M, wherein
   the first reference signal and the second reference signal are used to determine a measurement result of a sensing target.

2. The method according to claim 1, wherein a bandwidth of the second frequency band is the same as a bandwidth of the first frequency band.

3. The method according to claim 1 or 2, wherein each second reference signal is mapped to the second frequency band by using a plurality of second combs, and a greatest common divisor of sizes of every two second combs is not greater than M.

4. The method according to claim 3, wherein the size of each second comb is an integer multiple of M.

5. The method according to claim 3 or 4, wherein when the second reference signal is mapped to the second frequency band by using the plurality of second combs, different second combs correspond to a same start subcarrier for mapping.

6. The method according to claim 1 or 2, wherein when there is one second comb, a size of the second comb is N, N is a positive integer, and the method further comprises:
   periodically sending a third reference signal, wherein the third reference signal is mapped to a third frequency band by using a third comb whose size is X, X is a positive integer greater than M and not equal to N, and a greatest common divisor of X and N is not greater than M.

7. The method according to claim 6, wherein a bandwidth of the third frequency band is the same as the bandwidth of the second frequency band.

8. The method according to claim 6 or 7, wherein each third reference signal corresponds to one second reference signal, and a time interval between a sending moment of each third reference signal and a sending moment of the second reference signal corresponding to the third reference signal is less than or equal to a first threshold.

9. The method according to any one of claims 6 to 8, wherein both X and N are integer multiples of M.

10. The method according to any one of claims 1 to 9, wherein a time interval between a sending moment of the first reference signal and a sending moment of a $1^{st}$ second reference signal is less than or equal to a second threshold.

11. The method according to any one of claims 1 to 10, wherein before the periodically sending the second reference signal, the method further comprises:

    receiving a first reflected signal, wherein the first reflected signal is an echo signal that is of the first reference signal and that is reflected from the sensing target, and the first reflected signal is used to determine a first range; and
    determining the size of the second comb based on the first range.

12. The method according to any one of claims 1 to 10, wherein before the periodically sending the second reference signal, the method further comprises:
    receiving indication information, wherein the indication information is used to determine the size of the second comb.

13. The method according to claim 12, wherein a second reflected signal is received, the second reflected signal is a reflected signal that is of the first reference signal and that is reflected from the sensing target, there are a plurality of sensing targets, the second reflected signal is used to determine second ranges of the different sensing targets, and the indication information comprises:

the second ranges of the different sensing targets;
a difference between every two second ranges; or
a recommended size of the second comb, wherein
the second ranges corresponding to the different sensing targets or the difference between the every two second ranges is used to determine the size of the second comb.

14. The method according to any one of claims 1 to 13, wherein the measurement result of the sensing target comprises a third range, a fourth range, and a first velocity corresponding to the fourth range, the third range is obtained based on the first reference signal, the fourth range is obtained based on the second reference signal, the first velocity is a moving velocity that is of the sensing target and that is obtained based on the second reference signal, and there are one or more sensing targets; and
the first comb and the second comb are used to match the third range in the measurement result with the fourth range and the first velocity corresponding to the fourth range.

15. The method according to any one of claims 1 to 14, wherein the first reference signal is periodically sent, and a sending periodicity of the first reference signal is greater than a sending periodicity of the second reference signal.

16. A reference signal processing method, comprising:

receiving a second reflected signal, wherein the second reflected signal is a reflected signal that is of a first reference signal and that is reflected from a sensing target, the first reference signal is mapped to a first frequency band by using a first comb whose size is M, and M is a positive integer; and
receiving a third reflected signal, wherein the third reflected signal is a reflected signal that is of a periodically sent second reference signal and that is reflected from the sensing target, each second reference signal is mapped to a second frequency band by using at least one second comb, and a size of each second comb is greater than M, wherein
the first reference signal and the second reference signal are used to determine a measurement result of the sensing target.

17. The method according to claim 16, wherein when there is one second comb, a size of the second comb is N, and the method further comprises:
receiving a fourth reflected signal, wherein the fourth reflected signal is a reflected signal that is of a periodically sent third reference signal and that is reflected from the sensing target, each third reference signal is mapped to a third frequency band by using a third comb whose size is X, X is an integer greater than M and not equal to N, and a greatest common divisor of X and N is not greater than M.

18. The method according to claim 16 or 17, wherein there are a plurality of sensing targets, and the method further comprises:

determining second ranges of the different sensing targets based on the second reflected signal; and
sending indication information based on the second ranges, wherein the indication information is used to determine the size of the second comb.

19. The method according to claim 18, wherein the indication information comprises:

the second ranges of the different sensing targets;
a difference between every two second ranges; or
a recommended size of the second comb, wherein
the second ranges of the different sensing targets or the difference between the every two second ranges is used to determine the size of the second comb.

20. The method according to any one of claims 16 to 19, wherein the measurement result of the sensing target comprises a third range, a fourth range, and a first velocity corresponding to the fourth range, the third range is obtained based on the first reference signal, the fourth range is obtained based on the second reference signal, the first velocity is a moving velocity that is of the sensing target and that is obtained based on the second reference signal, and there are one or more sensing targets; and

the first comb and the second comb are used to match the third range in the measurement result with the fourth range and the first velocity corresponding to the fourth range.

21. A communication apparatus, comprising a transceiver module and a processing module, wherein

the transceiver module is configured to perform a sending step or a receiving step in the method according to any one of claims 1 to 15; and
the processing module is configured to perform a step other than the sending step and the receiving step in the method according to any one of claims 1 to 15.

22. A communication apparatus, comprising a transceiver module and a processing module, wherein

the transceiver module is configured to perform a sending step or a receiving step in the method according to any one of claims 16 to 20; and
the processing module is configured to perform a step other than the sending step and the receiving step in the method according to any one of claims 16 to 20.

23. A communication apparatus, comprising at least one processor, coupled to a storage, wherein

the storage is configured to store a program or instructions; and
the at least one processor is configured to execute the program or the instructions, to enable the apparatus to implement the method according to any one of claims 1 to 15.

24. A communication apparatus, comprising at least one processor, coupled to a storage, wherein

the storage is configured to store a program or instructions; and
the at least one processor is configured to execute the program or the instructions, to enable the apparatus to implement the method according to any one of claims 16 to 20.

25. A communication system, comprising:
the communication apparatus according to claim 23, and the communication apparatus according to claim 24.

26. A computer-readable storage medium, comprising instructions, wherein when the instructions are run on a computer, the computer is enabled to perform the method according to any one of claims 1 to 15, or the computer is enabled to perform the method according to any one of claims 16 to 20.

27. A computer program product comprising instructions, wherein when the computer program product runs on a computer, the computer is enabled to perform the method according to any one of claims 1 to 15, or the computer is enabled to perform the method according to any one of claims 16 to 20.

A

Communication
apparatus

B

C

D

E

FIG. 1A

First apparatus

Send a
reference signal

Receive a
reflected signal

Sensing target

FIG. 1B

FIG. 1C

A first apparatus sends a first reference signal, where the first reference signal is mapped to a first frequency band by using a first comb whose size is M, and M is a positive integer — 201

The first apparatus periodically sends a second reference signal, where the second reference signal is mapped to a second frequency band by using a second comb whose size is N, a bandwidth of the second frequency band is the same as a bandwidth of the first frequency band, and N>M — 202

FIG. 2

FIG. 3

Unambiguous
ranging result
based on an RS1:

$R_{\max,1}$

$R_{\max,2}$

$R_1^A$      $R_1^B$      $R_1^C$      $R_1^D$      $R_1^E$

Ambiguous
ranging result
and unambiguous
velocity
measurement
result that are
based on an RS2:

V

$V^E$

$V^A$

$V^B$

$V^C$

$V^D$

$R_2^A$    $R_2^D$ $R_2^B$     $R_2^C$ $R_2^E$

R

FIG. 4

Unambiguous
ranging result
based on an RS1:

$R_{\max,1}$

$R_{\max,2}$

$R_1^{A'}$     $R_1^{B'}$     $R_1^{C'}$     $R_1^{D'}$     $R_1^{E'}$

Ambiguous
ranging result and
unambiguous
velocity
measurement
result that are
based on an RS2:

V

$V^{E'}$

$V^{A'}$

$V^{B'}$

$V^{C'}$

$V^{D'}$

$R_2^{A'}$     $R_2^{BD'}$     $R_2^{C'}$ $R_2^{E'}$

R

FIG. 5

A first apparatus sends a first reference signal, where the first reference signal is mapped to a first frequency band by using a first comb whose size is M, and M is a positive integer ⟋ 601

The first apparatus periodically sends a second reference signal, where the second reference signal is mapped to a second frequency band by using a second comb whose size is N, a bandwidth of the second frequency band is the same as a bandwidth of the first frequency band, and N>M ⟋ 602

The first apparatus periodically sends a third reference signal, where the third reference signal is mapped to a third frequency band by using a third comb whose size is X, a bandwidth of the third frequency band is the same as the bandwidth of the first frequency band, X>M, X  N, and a greatest common divisor of (N, X)  M ⟋ 603

FIG. 6

FIG. 7

FIG. 8

FIG. 9

1001

A first apparatus sends a first reference signal, where the first reference signal is mapped to a first frequency band by using a first comb whose size is M, and M is a positive integer.

1002

The first apparatus receives a measurement result that is based on the first reference signal

1003

The first apparatus periodically sends a second reference signal, where the second reference signal is mapped to a second frequency band by using a second comb whose size is N, a bandwidth of the second frequency band is the same as a bandwidth of the first frequency band, and N>M.

1004

The first apparatus periodically sends a second reference signal, where the second reference signal is mapped to a second frequency band by using second combs whose sizes are N and X, a bandwidth of the second frequency band is the same as a bandwidth of the first frequency band, N>M, X>M, N≠X, and a greatest common divisor of (N, X)≤M.

FIG. 10

1100

Communication
apparatus

Transceiver module 1101

Processing module 1102

FIG. 11A

1100

Processor
1110

Transceiver
1130

Storage
1120

FIG. 11B

1100

Communication
apparatus

1110

Processor

1120

Storage

Computer
program code

1130

Transceiver

Transmitter

1131

1132

Receiver

1133

FIG. 11C

**EP 4 765 982 A1**

## INTERNATIONAL SEARCH REPORT

| International application No. |
|---|
| **PCT/CN2024/086709** |

| A. | CLASSIFICATION OF SUBJECT MATTER |
|---|---|

H04W 72/12(2023.01)i

According to International Patent Classification (IPC) or to both national classification and IPC

| B. | FIELDS SEARCHED |
|---|---|

Minimum documentation searched (classification system followed by classification symbols)

IPC:H04W,H04Q

Documentation searched other than minimum documentation to the extent that such documents are included in the fields searched

Electronic data base consulted during the international search (name of data base and, where practicable, search terms used)

3GPP, CNTXT, ENTXT, DWPI: 参考信号, RS, 第二, 间隔, 频率, 频域, 梳齿, 梳状, 梳子, 尺寸, 大小, 密度, 粒度, comb, second, reference, signal, size, sounding, frequency

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2023125417 A1 (HUAWEI TECHNOLOGIES CO., LTD.) 06 July 2023 (2023-07-06) description, page 12, line 25-page 17, line 19 | 1-27 |
| X | WO 2022262947 A1 (NOKIA TECHNOLOGIES OY) 22 December 2022 (2022-12-22) description, paragraphs [0041]-[0064] | 1-27 |
| A | WO 2023097629 A1 (GUANGDONG OPPO MOBILE TELECOMMUNICATIONS CORP., LTD.) 08 June 2023 (2023-06-08) entire document | 1-27 |
| A | WO 2023051182 A1 (HUAWEI TECHNOLOGIES CO., LTD.) 06 April 2023 (2023-04-06) entire document | 1-27 |
| A | LENOVO. "Discussion of SRS enhancement" *3GPP TSG RAN WG1#109-e R1-2204166*, 20 May 2022 (2022-05-20), entire document | 1-27 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 July 2024** | **11 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/086709**

| Patent document cited in search report | | | Publication date (day/month/year) | Patent family member(s) | | | Publication date (day/month/year) |
|---|---|---|---|---|---|---|---|
| WO | 2023125417 | A1 | 06 July 2023 | CN | 116437467 | A | 14 July 2023 |
| WO | 2022262947 | A1 | 22 December 2022 | EP | 4356554 | A1 | 24 April 2024 |
| WO | 2023097629 | A1 | 08 June 2023 | None | | | |
| WO | 2023051182 | A1 | 06 April 2023 | None | | | |

Form PCT/ISA/210 (patent family annex) (July 2022)

**EP 4 765 982 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311088783